# EUROPEAN PATENT APPLICATION

(11) **EP 4 733 094 A1**
(43) Date of publication of application: **29.04.2026**
(21) Application number: 23942140.7
(22) Date of filing: 01.11.2023
(51) Int. Cl.: B60H 1/00

(54) **THERMAL MANAGEMENT SYSTEM AND CONTROL METHOD THEREFOR, VEHICLE, AND STORAGE MEDIUM**

(30) Priority: 20.06.2023 CN 202310740242
(71) Applicant: Chongqing Changan Automobile Co., Ltd., Chongqing 400023 (CN)
(72) Inventor: LI, Ming, Chongqing 400023 (CN); WANG, Zhengang, Chongqing 400023 (CN); YANG, Fan, Chongqing 400023 (CN); LUAN, Aidong, Chongqing 400023 (CN); LI, Jingyuan, Chongqing 400023 (CN)
(74) Representative: Müller Schupfner & Partner Patent- und Rechtsanwaltspartnerschaft mbB (Hamburg)
(86) International application number: PCT/CN2023/129185
(87) International publication number: WO 2024/259873

(57) **Abstract**

The present application relates to the technical field of vehicles, and relates to a thermal management system and a control method therefor, a vehicle, and a storage medium. The thermal management system comprises a power battery, a motor, a heater core, a compressor, an evaporator core, a motor radiator, a low-temperature radiator, a heater, a battery water pump, a motor water pump, a heating water pump, a water-cooled condenser, a battery cooler, a multi-way valve, and a connector; the connector is separately connected to an outlet of the power battery, an inlet of the motor, an outlet of the heater core, an inlet of the motor radiator, an outlet of the low-temperature radiator, an inlet of the battery water pump, an outlet of the motor water pump, a cooling liquid inlet of the water-cooled condenser, a cooling liquid outlet of the battery cooler, and a cooling liquid inlet of the battery cooler. The present application realizes high integration of a battery cooling loop, a motor cooling loop, and a passenger compartment loop, and reduces assembly parts, thus meeting lightweight requirements for new energy automobiles.

## Description

### Field of the Invention

The present application relates to the technical field of vehicles, particularly, to the technical field of thermal management of vehicles, and specifically, to a thermal management system and a control method therefor, a vehicle, and a storage medium.

### Background of the Invention

Compared to conventional fuel automobiles, new energy automobiles have a thermal management system with more circulation loops, such as electric drive cooling loop, a battery heating loop, and a passenger compartment cooling loop. Addition of each loop will increase a number of spare parts, costs, and weight of a vehicle.

As the weight of a new energy automobile is increased, power consumption of the new energy automobile increases and a driving range decreases. Therefore, how to design a thermal management system to meet lightweight requirements for new energy automobiles is a current technical problem that urgently needs to be addressed.

### Summary of the Invention

The present application provides a thermal management system and a control method therefor, a vehicle, and a storage medium, to achieve high integration of a battery cooling loop, a motor cooling loop, and a passenger compartment loop, reduce assembly parts, and meet lightweight requirements for new energy automobiles. The present application provides the following technical solutions.

In a first aspect, the present application provides a thermal management system, which includes a power battery, a motor, a heater core, a compressor, an evaporator core, a motor radiator, a low-temperature radiator, a heater, a battery water pump, a motor water pump, a heating water pump, a water-cooled condenser, a battery cooler, a multi-way valve, and a connector. The connector is separately connected to an outlet of the power battery, an inlet of the motor, an outlet of the heater core, an inlet of the motor radiator, an outlet of the low-temperature radiator, an inlet of the battery water pump, an outlet of the motor water pump, a cooling liquid inlet of the water-cooled condenser, a cooling liquid outlet of the battery cooler, and a cooling liquid inlet of the battery cooler. An input of the motor water pump is connected to an outlet of the motor, the inlet of the motor is connected to an outlet of the motor radiator, an outlet of the heater is separately connected to an inlet of the low-temperature radiator and an inlet of the heater core via the multi-way valve, an inlet of the heater is connected to a cooling liquid outlet of the water-cooled condenser, an outlet of the battery water pump is connected to an inlet of the power battery, an inlet of the evaporator core is connected to a refrigerant outlet of the water-cooled condenser, a refrigerant inlet of the water-cooled condenser is connected to a refrigerant outlet of the compressor, an inlet of the compressor is connected to an outlet of the evaporator core, a refrigerant outlet of the battery cooler is connected to a refrigerant inlet of the compressor, and a cooling liquid outlet of the heating water pump is connected to the inlet of the heater.

According to the foregoing technical means, the power battery, the motor, the compressor, the heater core, the evaporator core, the motor radiator, the low-temperature radiator, the heater, the battery water pump, the motor water pump, the heating water pump, the water-cooled condenser, the battery cooler, and the multi-way valve are communicated via the connector, thereby achieving high integration of a battery cooling loop, a motor cooling loop, and a passenger compartment loop, reducing assembly parts, and meeting lightweight requirements for new energy automobiles. In addition, by controlling the flow of cooling liquid and a refrigerant through the connector and the multi-way valve, a cooling liquid loop and a refrigerant loop are formed simultaneously, which can meet thermal management requirements for the power battery, thermal management requirements for the motor and/or thermal management requirements for a passenger compartment, thereby meeting thermal management requirements in scenarios.

In a possible implementation, the multi-way valve is a first three-way valve, and the connector is a nine-way valve. A first port of the nine-way valve is connected to the inlet of the motor water pump, a second port of the nine-way valve is connected to the inlet of the battery water pump, a third port of the nine-way valve is connected to the cooling liquid inlet of the battery cooler, a fourth port of the nine-way valve is connected to the cooling liquid outlet of the battery cooler, a fifth port of the nine-way valve is connected to the inlet of the motor radiator, a sixth port of the nine-way valve is separately connected to the outlet of the low-temperature radiator and the outlet of the heater core, a seventh port of the nine-way valve is connected to the cooling liquid inlet of the water-cooled condenser, an eighth port of the nine-way valve is connected to the outlet of the power battery, and a ninth port of the nine-way valve is connected to the inlet of the motor. A first port of the three-way valve is connected to the outlet of the heater, a second port of the three-way valve is connected to the inlet of the low-temperature radiator, and a third port of the three-way valve is connected to the inlet of the heater core.

According to the foregoing technical means, through one three-way valve and one nine-way valve, high integration of the battery cooling loop, the motor cooling loop, and the passenger compartment loop is achieved, assembly parts are reduced, and lightweight requirements for new energy automobiles are met. By controlling communication of the three-way valve and the nine-way valve, the battery cooling loop, the motor cooling loop, and the passenger compartment loop are controlled, to flexibly control the thermal management system.

In a possible implementation, the thermal management system operates in a first working mode, a second working mode, a third working mode, a fourth working mode, or a fifth working mode. When the thermal management system operates in the first working mode, the first port of the nine-way valve is communicated with the fifth port of the nine-way valve, the second port of the nine-way valve is communicated with the fourth port of the nine-way valve, the third port of the nine-way valve is communicated with the eighth port of the nine-way valve, the sixth port of the nine-way valve is communicated with the seventh port of the nine-way valve, the ninth port of the nine-way valve is closed, the first port of the three-way valve and the second port of the three-way valve are both opened, and the third port of the three-way valve is closed. When the thermal management system operates in the second working mode, the first port of the nine-way valve is communicated with the third port of the nine-way valve, the second port of the nine-way valve is communicated with the fourth port of the nine-way valve, the fifth port of the nine-way valve is communicated with the eighth port of the nine-way valve, the sixth port of the nine-way valve is communicated with the seventh port of the nine-way valve, the ninth port of the nine-way valve is opened, and the first port of the three-way valve, the second port of the three-way valve, and the third port of the three-way valve are all opened. When the thermal management system operates in the third working mode, the first port of the nine-way valve is communicated with the third port of the nine-way valve, the second port of the nine-way valve is communicated with the sixth port of the nine-way valve, the fourth port of the nine-way valve is communicated with the ninth port of the nine-way valve, the eighth port of the nine-way valve is communicated with the seventh port of the nine-way valve, the fifth port of the nine-way valve is closed, the first port of the three-way valve and the third port of the three-way valve are both opened, and the second port of the three-way valve is closed. When the thermal management system operates in the fourth working mode, the first port of the nine-way valve is communicated with the third port of the nine-way valve, the second port of the nine-way valve is communicated with the eighth port of the nine-way valve, the fifth port of the nine-way valve is communicated with the fourth port of the nine-way valve, the sixth port of the nine-way valve is communicated with the seventh port of the nine-way valve, the ninth port of the nine-way valve is opened, and the first port of the three-way valve, the second port of the three-way valve, and the third port of the three-way valve are all opened. When the thermal management system operates in the fifth working mode, the first port of the nine-way valve is communicated with the second port of the nine-way valve, the fourth port of the nine-way valve is communicated with the seventh port of the nine-way valve, the fifth port of the nine-way valve is communicated with the sixth port of the nine-way valve, the third port of the nine-way valve is communicated with the eighth port of the nine-way valve, the fifth port of the nine-way valve is closed, and the first port of the three-way valve, the second port of the three-way valve, and the third port of the three-way valve are all opened.

According to the foregoing technical means, by controlling communication of the nine-way valve and the three-way valve, the thermal management system can operate in multiple working modes, to perform precise control on a vehicle.

In a possible implementation, the multi-way valve is a first three-way valve, and the connector includes a first four-way valve, a second four-way valve, a third four-way valve, and a second three-way valve. A first port of the first four-way valve is connected to the inlet of the battery water pump, a second port of the first four-way valve is connected to a second port of the second four-way valve, a third port of the first four-way valve is connected to the cooling liquid inlet of the battery cooler, and a fourth port of the first four-way valve is connected to the outlet of the motor water pump. A first port of the second four-way valve is connected to the cooling liquid outlet of the battery cooler, a third port of the second four-way valve is connected to a first port of the third four-way valve, and a fourth port of the second four-way valve is connected to a first port of the second three-way valve. A second port of the third four-way valve is connected to the outlet of the power battery, a third port of the third four-way valve is connected to an inlet of the heating water pump, and a fourth port of the third four-way valve is separately connected to the outlet of the low-temperature radiator and the outlet of the heater core. A second port of the second three-way valve is connected to the outlet of the motor radiator, and a third port of the second three-way valve is connected to the inlet of the motor radiator.

In a possible implementation, the thermal management system further includes a flow channel plate. The battery water pump, the motor water pump, the heating water pump, the water-cooled condenser, the battery cooler, and the connector are integrated on the flow channel plate.

According to the foregoing technical means, by integrating the battery water pump, the motor water pump, the heating water pump, the water-cooled condenser, the battery cooler, and the connector on the flow channel plate, spare parts, such as a mounting bracket, are reduced, thus reducing costs of the vehicle and achieving lightweight of the vehicle.

In a possible implementation, the thermal management system further includes a water reservoir. An outlet of the water reservoir is separately connected to the motor and the motor water pump.

In a possible implementation, the thermal management system further includes a receiver-drier. An inlet of the receiver-drier is connected to the refrigerant outlet of the water-cooled condenser, and an outlet of the receiver-drier is connected to the inlet of the evaporator core.

In a second aspect, the present application provides a control method for a thermal management system. The thermal management system is the thermal management system according to the first aspect, and the control method includes: acquiring a current ambient temperature, and determining a working mode of the thermal management system based on the current ambient temperature, to perform thermal management on the power battery, the motor and/or a passenger compartment.

In a possible implementation, the thermal management system includes the thermal management system according to the first aspect, and the determining a working mode of the thermal management system based on the current ambient temperature includes: if the current ambient temperature is greater than or equal to a first pre-set threshold, controlling the thermal management system to operate in the first working mode; if the current ambient temperature is greater than or equal to a second pre-set threshold and is less than the first pre-set threshold, controlling the thermal management system to operate in the second working mode or the fourth working mode; or if the current ambient temperature is less than the second pre-set threshold, controlling the thermal management system to operate in the third working mode or the fourth working mode.

In a possible implementation, the if the current ambient temperature is greater than or equal to a second pre-set threshold and is less than the first pre-set threshold, controlling the thermal management system to operate in the second working mode or the fourth working mode includes: if the current ambient temperature is greater than or equal to the second pre-set threshold and is less than the first pre-set threshold, and the power battery is in a cooling mode, controlling the thermal management system to operate in the second working mode; or if the current ambient temperature is greater than or equal to the second pre-set threshold and is less than the first pre-set threshold, and the power battery is in a temperature equalization mode, controlling the thermal management system to operate in the fourth working mode; and the if the current ambient temperature is less than the second pre-set threshold, controlling the thermal management system to operate in the third working mode or the fourth working mode includes: if the current ambient temperature is less than the second pre-set threshold and the power battery is in a heating mode, controlling the thermal management system to operate in the third working mode; or if the current ambient temperature is less than the second pre-set threshold and the power battery is in the temperature equalization mode, controlling the thermal management system to operate in the fourth working mode.

In a possible implementation, the control method further includes: in response to an inspection operation, controlling the thermal management system to operate in the fifth working mode.

In a third aspect, the present application provides a vehicle, which includes the thermal management system according to the first aspect.

In a fourth aspect, the present application provides a computer-readable storage medium, configured to store computer-readable instructions. The computer-readable instructions, when executed by a processor, cause the processor to perform the control method according to the second aspect.

The thermal management system provided in the present application achieves the following beneficial effects: the power battery, the motor, the compressor, the heater core, the evaporator core, the motor radiator, the low-temperature radiator, the heater, the battery water pump, the motor water pump, the heating water pump, the water-cooled condenser, the battery cooler, and the multi-way valve are communicated via the connector, thereby achieving high integration of a battery cooling loop, a motor cooling loop, and a passenger compartment loop, reducing assembly parts, and meeting lightweight requirements for new energy automobiles. In addition, by controlling the flow of cooling liquid and a refrigerant through the connector and the multi-way valve, a cooling liquid loop and a refrigerant loop are formed simultaneously, which can meet thermal management requirements for the power battery, thermal management requirements for the motor and/or thermal management requirements for a passenger compartment, thereby meeting thermal management requirements in scenarios.

It should be noted that the technical effects achieved by any implementation in the second aspect to the fourth aspect may refer to the technical effects achieved by the corresponding implementation in the first aspect, and details are not described again herein.

It should be understood that the foregoing general descriptions and the following detailed descriptions are merely exemplary and illustrative, and are not intended to limit the present application.

### Brief Description of the Drawings

Fig. 1 is a first schematic structural diagram of a thermal management system according to an embodiment of the present application;
Fig. 2 is a second schematic structural diagram of a thermal management system according to an embodiment of the present application;
Fig. 3 is a third schematic structural diagram of a thermal management system according to an embodiment of the present application;
Fig. 4 is a first schematic structural diagram of a flow channel plate according to an embodiment of the present application;
Fig. 5 is a second schematic structural diagram of a flow channel plate according to an embodiment of the present application;
Fig. 6 is a schematic structural diagram of a nine-way valve according to an embodiment of the present application;
Fig. 7 is a flowchart of a control method for a thermal management system according to an embodiment of the present application; and
Fig. 8 is a flowchart of determining a working mode according to an embodiment of the present application.

### Detailed Description of the Embodiments

To enable those of ordinary skill in the art to better understand the technical solutions of the present application, the technical solutions in embodiments of the present application are clearly and completely described below with reference to the drawings.

It should be noted that the terms first, second, and the like in the description, the claims, and the drawings of the present application are used to distinguish similar objects and are not necessarily used to describe a specific order or sequence. It should be understood that data used in such a way are interchangeable under appropriate circumstances so that the embodiments of the application described herein are capable of being implemented in sequences other than those illustrated or described herein. Implementations described in the following exemplary embodiments do not represent all implementation consistent with the present application. On the contrary, they are merely examples of apparatus and methods consistent with some aspects of the present application as recited in the appended claims.

### Definitions of terms

An electronic expansion valve (EXV) is a programmable throttling control element operating in an electronic regulation mode. It utilizes electrical signals generated by regulated parameters to control the voltage or current applied to the expansion valve, thereby achieving adjustment of the liquid supply.

A positive temperature coefficient (PTC) heater includes a PTC ceramic heating element and an aluminum tube. The PTC heater of such a type has the advantages of small thermal resistance and high heat exchange efficiency, and is an automatic constant temperature and energy-saving electric heater.

An application scenario of the present application is briefly introduced.

Compared to conventional fuel automobiles, new energy automobiles have a thermal management system with more circulation loops, such as electric drive cooling loop, a battery heating loop, and a passenger compartment cooling loop. Each loop is an independent circuit system. Therefore, addition of each loop will increase a number of spare parts, costs, and weight of a vehicle.

As the weight of a new energy automobile is increased, power consumption of the new energy automobile increases and a driving range decreases. Therefore, how to design a thermal management system to meet lightweight requirements for new energy automobiles is a current technical problem that urgently needs to be addressed.

In addition, in some related technical solutions, a thermal management system for an electric automobile is disclosed. A related heat pump assembly is formed by integrating a plate heat exchanger, a water-cooled condenser, an electronic water pump, a gas-liquid separator, and an expansion tank into a whole. The heat pump assembly has interfaces respectively connected to a thermal management object, a front-end module assembly, a heating, ventilation, air-conditioning and cooling (HVAC) assembly, and an electronic compressor. The thermal management object, the front-end module assembly, the HVAC assembly, and the electronic compressor are respectively connected to the heat pump assembly via the corresponding interfaces.

In some technical solutions, an electric automobile thermal management circuit system and a control method therefor are disclosed. A related integrated module is separately connected to a compressor, an outdoor heat exchanger, and an HVAC unit assembly. The integrated module is connected to an indoor evaporator via a first refrigerant interface, is connected to a refrigerant outlet of an indoor condenser via a second refrigerant interface, is connected to a first end of the outdoor heat exchanger via a third refrigerant interface, is connected to a second end of the outdoor heat exchanger via a fourth refrigerant interface, and is connected to an inlet of the compressor via a fifth refrigerant interface.

In some technical solutions, an integrated thermal management module is disclosed, which includes a mounting bracket, a heat exchanger, and at least one flow distribution component. The heat changer and the flow distribution component are both mounted on the mounting bracket, a flow distribution cavity is formed inside the mounting bracket, the heat exchanger and the flow distribution component are respectively communicated with the flow distribution cavity, and the flow distribution component is configured to distribute cooling liquid flowing through the heat exchanger.

It can be learned that in the related technologies, the thermal management system has the following technical problems:
1) single function: the thermal management system is incapable of implementing multi-scenario coordinated operation among a battery loop, an electric drive loop, and a passenger loop of an entire vehicle, or rational energy recovery and utilization;
2) low reliability: the thermal management system requires a long connecting pipeline, which may cause leakage and other hidden dangers in long-term use; and
3) poor machinability: the thermal management system has a complicated piping layout, which takes up a lot of space, and is difficult to disassemble and assemble.

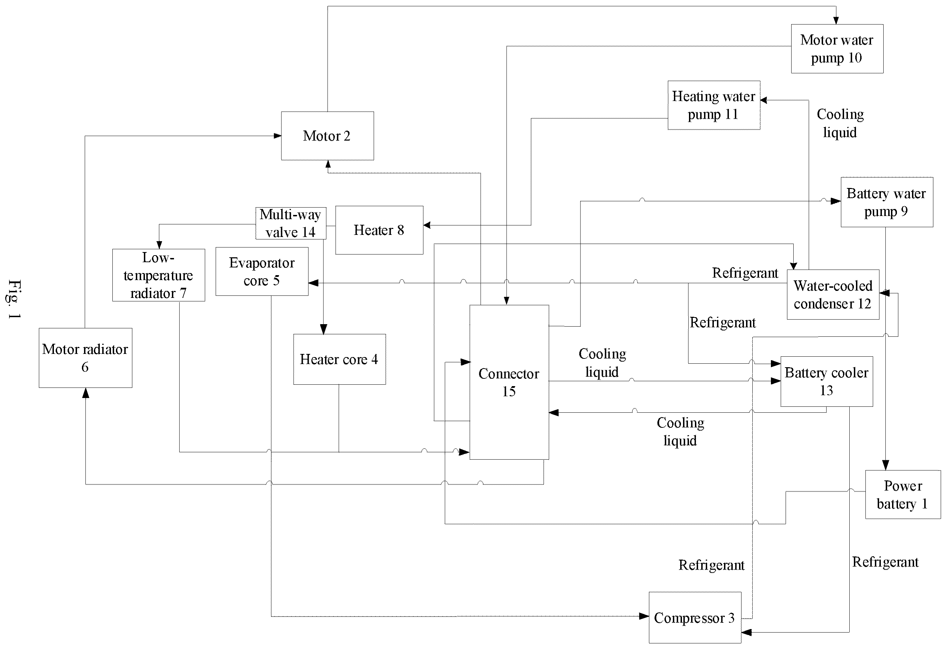

In view of the foregoing problems, as shown in Fig. 1, the present application provides a thermal management system 100, which includes a power battery 1, a motor 2, a compressor 3, a heater core 4, an evaporator core 5, a motor radiator 6, a low-temperature radiator 7, a heater 8, a battery water pump 9, a motor water pump 10, a heating water pump 11, a water-cooled condenser 12, a battery cooler 13, a multi-way valve 14, and a connector 15.

The connector 15 is separately connected to an outlet of the power battery 1, an inlet of the motor 2, an outlet of the heater core 4, an inlet of the motor radiator 6, an outlet of the low-temperature radiator 7, an inlet of the battery water pump 9, an outlet of the motor water pump 10, a cooling liquid inlet of the water-cooled condenser 12, a cooling liquid outlet of the battery cooler 13, and a cooling liquid inlet of the battery cooler 13.

An input of the motor water pump 10 is connected to an outlet of the motor 2, and the inlet of the motor 2 is connected to an outlet of the motor radiator 6.

An outlet of the heater 8 is separately connected to an inlet of the low-temperature radiator 7 and an inlet of the heater core 4 via the multi-way valve 14, an inlet of the heater 8 is connected to a cooling liquid outlet of the water-cooled condenser 12, an outlet of the battery water pump 9 is connected to an inlet of the power battery 1, an inlet of the evaporator core 5 is connected to a refrigerant outlet of the water-cooled condenser 12, a refrigerant inlet of the water-cooled condenser 12 is connected to a refrigerant outlet of the compressor 3, an inlet of the compressor 3 is connected to an outlet of the evaporator core 5, a refrigerant outlet of the battery cooler 13 is connected to a refrigerant inlet of the compressor 3, and a cooling liquid outlet of the heating water pump 11 is connected to an inlet of the heater 8.

In this way, the power battery 1, the motor 2, the compressor 3, the heater core 4, the evaporator core 5, the motor radiator 6, the low-temperature radiator 7, the heater 8, the battery water pump 9, the motor water pump 10, the heating water pump 11, the water-cooled condenser 12, the battery cooler 13, and the multi-way valve 14 are communicated via the connector 15, thereby achieving high integration of a battery cooling loop, a motor cooling loop, and a passenger compartment loop, reducing assembly parts, and meeting lightweight requirements for new energy automobiles.

In addition, by controlling the flow of cooling liquid and a refrigerant through the connector 15 and the multi-way valve 14, a cooling liquid loop and a refrigerant loop are formed simultaneously, which can meet thermal management requirements for the power battery 1, thermal management requirements for the motor 2 and/or thermal management requirements for a passenger compartment, thereby meeting thermal management requirements in multiple scenarios.

In some designs, to control the flow of the cooling liquid and the refrigerant, the multi-way valve 14 is a first three-way valve 14, and the connector 15 is a nine-way valve 30.

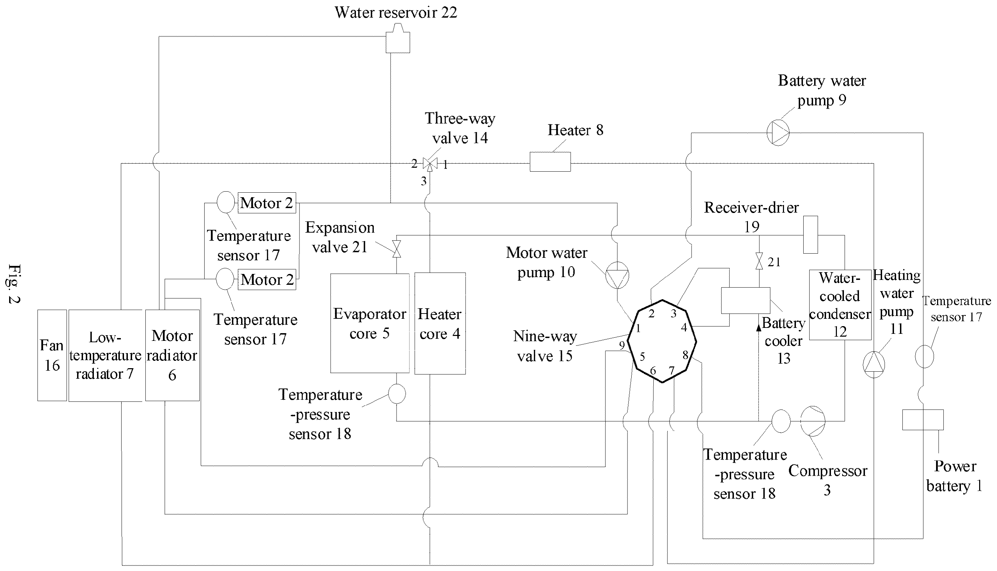

Specifically, as shown in Fig. 2, the multi-way valve 14 is a first three-way valve 14, and the connector 15 is a nine-way valve 30.

A first port 1 of the nine-way valve 30 is connected to the inlet of the motor water pump 10, a second port 2 of the nine-way valve 30 is connected to the inlet of the battery water pump 9, a third port 3 of the nine-way valve 30 is connected to the cooling liquid inlet of the battery cooler 13, a fourth port 4 of the nine-way valve 30 is connected to the cooling liquid outlet of the battery cooler 13, a fifth port 5 of the nine-way valve 30 is connected to the inlet of the motor radiator 6, a sixth port 6 of the nine-way valve 30 is separately connected to the outlet of the low-temperature radiator 7 and the outlet of the heater core 4, a seventh port 7 of the nine-way valve 30 is connected to the cooling liquid inlet of the water-cooled condenser 12, an eighth port 8 of the nine-way valve 30 is connected to the outlet of the power battery 1, and a ninth port 9 of the nine-way valve 30 is connected to the inlet of the motor 2.

A first port 1 of the first three-way valve 14 is connected to the outlet of the heater 8, a second port 2 of the first three-way valve 14 is connected to the inlet of the low-temperature radiator 7, and a third port 3 of the first three-way valve 14 is connected to the inlet of the heater core 4. It can be understood that through the first three-way valve 14 and one nine-way valve 30, the flow of the cooling liquid and the refrigerant is controlled, to achieve thermal management of an entire vehicle.

In Fig. 2, the thermal management system further includes fans 16, temperature sensors 17, temperature-pressure sensors 18, a receiver-drier 19, expansion valves 21, and a water reservoir 22.

Specifically, as shown in Fig. 2, the fans 16 are disposed at positions corresponding to the low-temperature radiator 7 and the motor radiator 6. The temperature sensors 17 are respectively disposed at the inlet of the motor 2 and the inlet of the power battery 1. The temperature-pressure sensors 18 are respectively disposed at the inlet of the compressor 3 and the outlet of the evaporator core 5. The receiver-drier 19 is connected to the refrigerant outlet of the water-cooled condenser 12. The expansion valves 21 are disposed at the inlet of the evaporator core 5 and the inlet of the battery cooler 13. Two ends of the water reservoir 22 are respectively connected to the motor water pump 10 and the motor radiator 6.

In Fig. 2, two motors are exemplarily illustrated. In practice, more or fewer motors may be disposed.

In some embodiments, the heater 8 may be a PTC heater.

In another case, the multi-way valve 14 may be a four-way valve.

In some designs, the thermal management system 100 operates in a first working mode, a second working mode, a third working mode, a fourth working mode, or a fifth working mode.

When the thermal management system operates in the first working mode, the first port 1 of the nine-way valve 30 is communicated with the fifth port 5 of the nine-way valve 30, the second port 2 of the nine-way valve 30 is communicated with the fourth port 4 of the nine-way valve 30, the third port 3 of the nine-way valve 30 is communicated with the eighth port 8 of the nine-way valve 30, the sixth port 6 of the nine-way valve 30 is communicated with the seventh port 7 of the nine-way valve 30, the ninth port 9 of the nine-way valve 30 is closed, the first port 1 of the first three-way valve 14 and the second port 2 of the first three-way valve 14 are both opened, and the third port 3 of the first three-way valve 14 is closed.

When the thermal management system operates in the first working mode, the battery water pump 9 is started, and the cooling liquid flows through the power battery 1 and enters the battery cooler 13 via the eighth port 8 of the nine-way valve 30 and the third port 3 of the nine-way valve 30 under the action of the battery water pump 9. Further, the cooling liquid exchanges heat with the refrigerant flowing through the battery cooler 13. Subsequently, the cooled cooling liquid flows back to the battery water pump 9 via the fourth port 4 of the nine-way valve 30 and the second port 2 of the nine-way valve 30.

When the thermal management system operates in the first working mode, the motor water pump 10 is started, the cooling liquid enters the motor radiator 6 via the first port 1 of the nine-way valve 30 and the fifth port 5 of the nine-way valve 30 under the action of the motor water pump 10, and exchanges heat with outside air in the motor radiator 6, and the cooled cooling liquid enters the motor 2 to cool the motor 2, and flows back to the motor water pump 10.

When the thermal management system operates in the first working mode, the heating water pump 11 is started, the cooling liquid flows through the first three-way valve and enters the low-temperature radiator 7 under the action of the heating water pump 11, and exchanges heat with outside air, the cooled cooling liquid enters the water-cooled condenser 12 via the sixth port 6 of the nine-way valve 30 and the seventh port 7 of the nine-way valve 30, and exchanges heat with the refrigerant flowing through the water-cooled condenser 12, and the heated cooling liquid enters the low-temperature radiator 7 again through the heating water pump 11.

When the thermal management system operates in the first working mode, the compressor 3 is started, the refrigerant enters the water-cooled condenser 12 under the action of the compressor 3, and exchanges heat with the cooling liquid flowing through the water-cooled condenser 12, and the cooled refrigerant separately enters the evaporator core 5 and the battery cooler 13. In the evaporator core 5, the cooled refrigerant exchanges heat with hot air in the passenger compartment to cool the passenger compartment. In the battery cooler 13, the cooled refrigerant exchanges heat with the cooling liquid flowing through the battery cooler 13 to cool the battery. The refrigerant flowing through the evaporator core 5 and the refrigerant flowing through the battery cooler 13 enter the water-cooled condenser 12 again through the compressor 3.

When the thermal management system operates in the second working mode, the first port 1 of the nine-way valve 30 is communicated with the third port 3 of the nine-way valve 30, the second port 2 of the nine-way valve 30 is communicated with the fourth port 4 of the nine-way valve 30, the fifth port 5 of the nine-way valve 30 is communicated with the eighth port 8 of the nine-way valve 30, the sixth port 6 of the nine-way valve 30 is communicated with the seventh port 7 of the nine-way valve 30, the ninth port 9 of the nine-way valve 30 is opened, and the first port 1 of the first three-way valve 14, the second port 2 of the first three-way valve 14, and the third port 3 of the first three-way valve 14 are all opened.

In some embodiments, an opening percentage of the ninth port 9 of the nine-way valve 30 falls within a first pre-set range.

Exemplarily, the first pre-set range is 30% to 50%.

For example, the opening percentage of the ninth port of the nine-way valve 30 is 36%.

When the thermal management system operates in the second working mode, the battery water pump 9 and the motor water pump 10 are both started, the cooling liquid flows through the power battery 1 and enters the motor radiator 6 via the eighth port 8 of the nine-way valve 30 and the fifth port 5 of the nine-way valve 30 under the action of the battery water pump 9, and exchanges heat with outside air, and the cooled cooling liquid enters the motor water pump 10 through the motor 2. The cooling liquid enters the battery cooler 13 via the first port 1 of the nine-way valve 30 and the third port 3 of the nine-way valve 30 under the action of the motor water pump 10, exchanges heat with the refrigerant flowing through the battery cooler 13 in the battery cooler 13, and enters the power battery 1 under the action of the battery water pump 9.

When the thermal management system operates in the second working mode, a channel from the first three-way valve to the low-temperature radiator 7 is opened, and a channel from the first three-way valve to the heater core 4 is opened. The heating water pump 11 is started, the cooling liquid flows through the first three-way valve and separately enters the low-temperature radiator 7 and the heater core 4 under the action of the heating water pump 11, in the low-temperature radiator 7, the cooling liquid exchanges heat with outside air, in the heater core 4, the cooling liquid exchanges heat with air in the passenger compartment to heat the passenger compartment, the cooled cooling liquid enters the water-cooled condenser 12 via the sixth port 6 of the nine-way valve 30 and the seventh port 7 of the nine-way valve 30 and exchanges heat with the refrigerant flowing through the water-cooled condenser 12, and the heated cooling liquid enters the low-temperature radiator 7 again through the heating water pump 11.

When the thermal management system operates in the second working mode, the compressor 3 is started, the refrigerant enters the water-cooled condenser 12 under the action of the compressor 3 and exchanges heat with the cooling liquid flowing through the water-cooled condenser 12, the cooled refrigerant separately enters the evaporator core 5 and the battery cooler 13, in the evaporator core 5, the cooled refrigerant exchanges heat with hot air in the passenger compartment to cool the passenger compartment, in the battery cooler 13, the cooled refrigerant exchanges heat with the cooling liquid flowing through the battery cooler 13 of the battery loop to cool the battery, and the refrigerant flowing through the evaporator core 5 and the refrigerant flowing through the battery cooler 13 enter the water-cooled condenser 12 again through the compressor 3.

In some embodiments, the cooled refrigerant enters the receiver-drier for drying, and separately enters the evaporator core 5 and the battery cooler 13 after being throttled and cooled by a throttling apparatus.

Exemplarily, the throttling apparatus is an expansion valve.

When the thermal management system operates in the third working mode, the first port 1 of the nine-way valve 30 is communicated with the third port 3 of the nine-way valve 30, the second port 2 of the nine-way valve 30 is communicated with the sixth port 6 of the nine-way valve 30, the fourth port 4 of the nine-way valve 30 is communicated with the ninth port 9 of the nine-way valve 30, the eighth port 8 of the nine-way valve 30 is communicated with the seventh port 7 of the nine-way valve 30, the fifth port 5 of the nine-way valve 30 is closed, the first port 1 of the first three-way valve 14 and the third port 3 of the first three-way valve 14 are both opened, and the second port 2 of the three-way valve 14 is closed.

When the thermal management system operates in the third working mode, the channel from the first three-way valve to the low-temperature radiator 7 is closed, and the channel from the first three-way valve to the heater core 4 is opened. The battery water pump 9 and the heating water pump 11 are both started, the cooling liquid flows through the power battery 1 and enters the water-cooled condenser 12 via the eighth port 8 of the nine-way valve 30 and the seventh port 7 of the nine-way valve 30 under the action of the battery water pump 9, and exchanges heat with the refrigerant flowing through the water-cooled condenser 12 in the water-cooled condenser 12, the heated cooling liquid enters the heater 8 through the heating water pump 11, and is further heated in the heater 8, the further heated cooling liquid enters the heater core 4 via the first three-way valve, and exchanges heat with air in the passenger compartment in the heater core 4, and the cooled cooling liquid enters the power battery 1 through the battery water pump 9.

When the thermal management system operates in the third working mode, the motor water pump 10 is started, the cooling liquid enters the battery cooler 13 via the first port 1 of the nine-way valve 30 and the third port 3 of the nine-way valve 30 under the action of the motor water pump 10, and exchanges heat with the refrigerant flowing through the battery cooler 13 in the battery cooler 13, and the cooled cooling liquid enters the motor water pump 10 through the motor 2.

When the thermal management system operates in the third working mode, the compressor 3 is started, the refrigerant enters the water-cooled condenser 12 under the action of the compressor 3 and exchanges heat with the cooling liquid flowing through the water-cooled condenser 12, the cooled refrigerant enters the battery cooler 13, in the battery cooler 13, the cooled refrigerant exchanges heat with the cooling liquid flowing through the battery cooler 13 to cool the battery, and the refrigerant flowing through the battery cooler 13 enters the water-cooled condenser 12 again through the compressor 3.

In some embodiments, the cooled refrigerant enters the receiver-drier for drying, and enters the battery cooler 13 after being throttled and cooled by the throttling apparatus.

When the thermal management system operates in the fourth working mode, the first port 1 of the nine-way valve 30 is communicated with the third port 3 of the nine-way valve 30, the second port 2 of the nine-way valve 30 is communicated with the eighth port 8 of the nine-way valve 30, the fifth port 5 of the nine-way valve 30 is communicated with the fourth port 4 of the nine-way valve 30, the sixth port 6 of the nine-way valve 30 is communicated with the seventh port 7 of the nine-way valve 30, the ninth port 9 of the nine-way valve 30 is opened, and the first port 1 of the first three-way valve 14, the second port 2 of the first three-way valve 14, and the third port 3 of the first three-way valve 14 are all opened.

In some embodiments, an opening percentage of the ninth port 9 of the nine-way valve 30 falls within a second pre-set range.

Exemplarily, the second pre-set range is 30% to 50%.

For example, the opening percentage of the ninth port of the nine-way valve 30 is 36%.

When the thermal management system operates in the fourth working mode, the battery water pump 9 is started, and the cooling liquid flows through the power battery 1 and enters the battery water pump 9 via the nine-way valve 30 under the action of the battery water pump 9.

When the thermal management system operates in the fourth working mode, the motor water pump 10 is started, the cooling liquid enters the battery cooler 13 via the first port 1 of the nine-way valve 30 and the third port 3 of the nine-way valve 30 under the action of the motor water pump 10, and exchanges heat with the refrigerant flowing through the battery cooler 13 in the battery cooler 13, the cooled cooling liquid enters the motor radiator 6 via the fourth port 4 of the nine-way valve 30 and the fifth port 5 of the nine-way valve 30, and exchanges heat with outside air in the motor radiator 6, and the further cooled cooling liquid enters the motor 2. A flow rate of the cooling liquid flowing through the motor radiator 6 may be adjusted according to an actual situation.

When the thermal management system operates in the fourth working mode, the heating water pump 11 is started, the channel from the three-way valve to the low-temperature radiator 7 is opened, the channel from the three-way valve to the heater core 4 is opened, the cooling liquid separately enters the low-temperature radiator 7 and the heater core 4 via the three-way valve under the action of the heating water pump 11, in the low-temperature radiator 7, the cooling liquid exchanges heat with outside air, in the heater core 4, the cooling liquid exchanges heat with air in the passenger compartment, the cooled cooling liquid enters the water-cooled condenser 12 after converging via the sixth port 6 of the nine-way valve 30 and the seventh port 7 of the nine-way valve 30, and exchanges heat with the refrigerant flowing through the water-cooled condenser 12, and the heated cooling liquid enters the heating water pump 11 again.

When the thermal management system operates in the fourth working mode, the compressor 3 is started, the refrigerant enters the water-cooled condenser 12 under the action of the compressor 3 and exchanges heat with the cooling liquid flowing through the water-cooled condenser 12, the cooled refrigerant separately enters the evaporator core 5 and the battery cooler 13, in the evaporator core 5, the cooled refrigerant absorbs water vapor from the surrounding air to dry it, so as to dehumidify the passenger compartment, in the battery cooler 13, the cooled refrigerant exchanges heat with the cooling liquid flowing through the battery cooler 13 of the battery loop to cool the battery, and the refrigerant flowing through the evaporator core 5 and the refrigerant flowing through the battery cooler 13 enter the water-cooled condenser 12 again through the compressor 3.

In some embodiments, the cooled refrigerant enters the receiver-drier for drying, and separately enters the evaporator core 5 and the battery cooler 13 after being throttled and cooled by the throttling apparatus.

When the thermal management system operates in the fifth working mode, the first port 1 of the nine-way valve 30 is communicated with the second port 2 of the nine-way valve 30, the fourth port 4 of the nine-way valve 30 is communicated with the seventh port 7 of the nine-way valve 30, the fifth port 5 of the nine-way valve 30 is communicated with the sixth port 6 of the nine-way valve 30, the third port 3 of the nine-way valve 30 is communicated with the eighth port 8 of the nine-way valve 30, the fifth port 5 of the nine-way valve 30 is closed, and the first port 1 of the first three-way valve 14, the second port 2 of the first three-way valve 14, and the third port 3 of the first three-way valve 14 are all opened.

When the thermal management system operates in the fifth working mode, the power battery 1, the motor 2, the heater core 4, the motor radiator 6, the low-temperature radiator 7, the three-way valve, the battery water pump 9, the motor water pump 10, the heating water pump 11, the water-cooled condenser 12, the battery cooler 13, the nine-way valve 30, and the heater 8 are connected in series via water pipes, and the battery water pump 9, the motor water pump 10, and the heating water pump 11 are started.

It may be understood that to meet different thermal management requirements of the vehicle, the thermal management system 100 in the embodiments of the present application operates in five working modes: the first working mode, the second working mode, the third working mode, the fourth working mode, and the fifth working mode. Therefore, the thermal management system can meet thermal management requirements of vehicles in different scenarios.

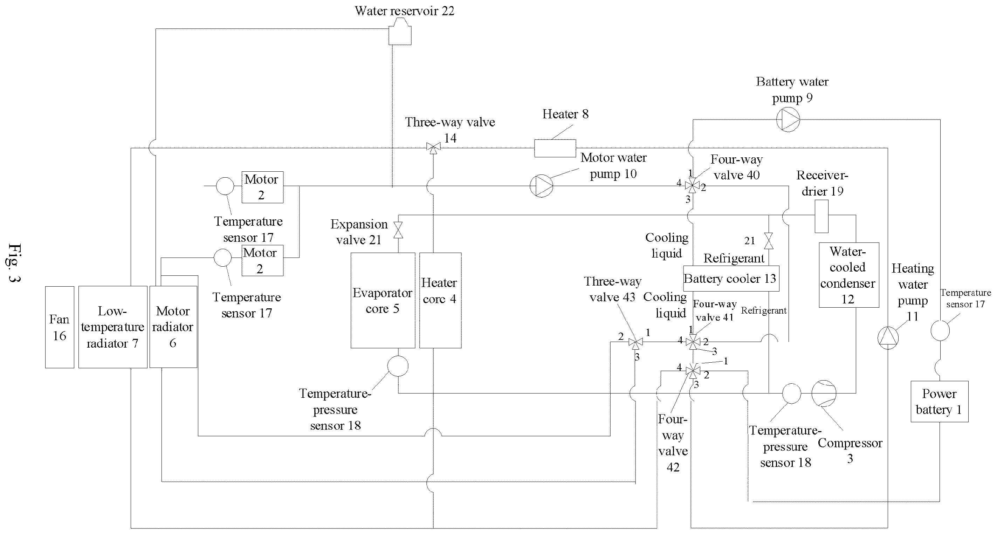

In a design, to control the flow of the cooling liquid and the refrigerant, as shown in Fig. 3, the multi-way valve 14 is a first three-way valve, and the connector 15 includes a first four-way valve 40, a second four-way valve 41, a third four-way valve 42, and a second three-way valve 43.

A first port 1 of the first four-way valve 40 is connected to the inlet of the battery water pump 9, a second port 2 of the first four-way valve 40 is connected to a second port 2 of the second four-way valve 41, a third port 3 of the first four-way valve 40 is connected to the cooling liquid inlet of the battery cooler 13, and a fourth port 4 of the first four-way valve 40 is connected to the outlet of the motor water pump 10.

A first port 1 of the second four-way valve 41 is connected to the cooling liquid outlet of the battery cooler 13, a third port 3 of the second four-way valve 41 is connected to a first port 1 of the third four-way valve 42, and a fourth port 4 of the second four-way valve 41 is connected to a first port 1 of the second three-way valve 43.

A second port 2 of the third four-way valve 42 is connected to the outlet of the power battery 1, a third port 3 of the third four-way valve 42 is connected to the inlet of the heating water pump 11, and a fourth port 4 of the third four-way valve 42 is separately connected to the outlet of the low-temperature radiator 7 and the outlet of the heater core 4.

An outlet of the compressor 3 is connected to an inlet of the water-cooled condenser 12, and an outlet of the water-cooled condenser 12 is separately connected to the inlet of the evaporator core 5 and a refrigerant inlet of the battery cooler 13. The outlet of the evaporator core 5 is connected to the compressor 3. The refrigerant outlet of the battery cooler 13 is connected to the inlet of the compressor 3.

In Fig. 3, the thermal management system further includes fans 16, temperature sensors 17, temperature-pressure sensors 18, a receiver-drier 19, expansion valves 21, and a water reservoir 22.

Specifically, as shown in Fig. 3, the fans 16 are disposed at positions corresponding to the low-temperature radiator 7 and the motor radiator 6. The temperature sensors 17 are respectively disposed at the inlet of the motor 2 and the inlet of the power battery 1. The temperature-pressure sensors 18 are respectively disposed at the inlet of the compressor 3 and the outlet of the evaporator core 5. The receiver-drier 19 is connected to the refrigerant outlet of the water-cooled condenser 12. The expansion valves 21 are disposed at the inlet of the evaporator core 5 and the inlet of the battery cooler 13. Two ends of the water reservoir 22 are respectively connected to the motor water pump 10 and the motor radiator 6.

In Fig. 2, two motors are exemplarily illustrated. In practice, more or fewer motors may be disposed.

A second port 2 of the second three-way valve 43 is connected to the outlet of the motor radiator 6, and a third port 3 of the second three-way valve 43 is connected to the inlet of the motor radiator 6.

In a case that the multi-way valve 14 is the first three-way valve, and the connector 15 includes the first four-way valve 40, the second four-way valve 41, the third four-way valve 42, and the second three-way valve 43, the thermal management system 100 operates in a sixth working mode, a seventh working mode, an eighth working mode, a ninth working mode, or a tenth working mode.

When the thermal management system operates in the sixth working mode, the first port 1 of the first three-way valve 14 and the second port 2 of the first three-way valve 14 are both opened, and the third port 3 of the first three-way valve 14 is closed. The first port 1 of the first four-way valve 40 is communicated with the third port 3 of the first four-way valve 40, and the second port 2 of the first four-way valve 40 is communicated with the fourth port 4 of the first four-way valve 40. The first port 1 of the second four-way valve 41 is communicated with the third port 3 of the second four-way valve 41, and the first port 1 of the second four-way valve 41 is communicated with the third port 3 of the second four-way valve 41. The first port 1 of the third four-way valve 42 is communicated with the second port 2 of the first four-way valve 40, and the third port 3 of the third four-way valve 42 is communicated with the fourth port 4 of the third four-way valve 42.

When the thermal management system operates in the sixth working mode, the battery water pump 9 is started, and the cooling liquid flows through the power battery 1 and enters the battery cooler 13 via the second port 2 of the third four-way valve 42, the second port 2 of the third four-way valve 42, the third port 3 of the second four-way valve 41, and the first port 1 of the second four-way valve 41 under the action of the battery water pump 9. Further, the cooling liquid exchanges heat with the refrigerant flowing through the battery cooler 13. Subsequently, the cooled cooling liquid flows back to the battery water pump 9 via the third port 3 of the first four-way valve 40 and the first port 1 of the first four-way valve 40.

When the thermal management system operates in the sixth working mode, the motor water pump 10 is started, the cooling liquid enters the motor radiator 6 via the fourth port 4 of the first four-way valve 40, the second port 2 of the first four-way valve 40, the second port 2 of the second four-way valve 41, the fourth port 4 of the second four-way valve 41, the first port 1 of the second three-way valve 43, and the third port 3 of the second three-way valve 43 under the action of the motor water pump 10, and exchanges heat with outside air in the motor radiator 6, and the cooled cooling liquid enters the motor 2 to cool the motor 2, and flows back to the motor water pump 10.

When the thermal management system operates in the sixth working mode, the heating water pump 11 is started, the cooling liquid flows through the first three-way valve and enters the low-temperature radiator 7 under the action of the heating water pump 11, and exchanges heat with outside air, and the cooled cooling liquid enters the heating water pump 11 via the fourth port 4 of the third four-way valve 42 and the third port 3 of the third four-way valve 42. Subsequently, the cooling liquid enters the low-temperature radiator 7 through the heating water pump 11.

When the thermal management system operates in the sixth working mode, the compressor 3 is started, the refrigerant enters the water-cooled condenser 12 under the action of the compressor 3, and exchanges heat with the cooling liquid flowing through the water-cooled condenser 12, and the cooled refrigerant separately enters the evaporator core 5 and the battery cooler 13. In the evaporator core 5, the cooled refrigerant exchanges heat with hot air in the passenger compartment to cool the passenger compartment. In the battery cooler 13, the cooled refrigerant exchanges heat with the cooling liquid flowing through the battery cooler 13 to cool the battery. The refrigerant flowing through the evaporator core 5 and the refrigerant flowing through the battery cooler 13 enter the water-cooled condenser 12 again through the compressor 3.

When the thermal management system operates in the seventh working mode, the first port 1 of the first three-way valve 14, the second port 2 of the first three-way valve 14, and the third port 3 of the first three-way valve 14 are all opened.

When the thermal management system operates in the seventh working mode, the battery water pump 9 and the motor water pump 10 are both started, the cooling liquid flows through the power battery 1 and enters the motor radiator 6 via the second port 2 of the third four-way valve 42, the first port 1 of the third four-way valve 42, the third port 3 of the second four-way valve 41, the fourth port 4 of the second four-way valve 41, the first port 1 of the second three-way valve 43, and the third port 3 of the second three-way valve 43 under the action of the battery water pump 9, and exchanges heat with outside air, and the cooled cooling liquid enters the motor water pump 10 through the motor 2. The cooling liquid enters the battery cooler 13 via the fourth port 4 of the first four-way valve 40 and the third port 3 of the first four-way valve 40 under the action of the motor water pump 10, exchanges heat with the refrigerant flowing through the battery cooler 13 in the battery cooler 13, and enters the battery water pump 9 via the first port 1 of the second four-way valve 41 and the second port 2 of the second four-way valve 41.

When the thermal management system operates in the seventh working mode, a channel from the first three-way valve to the low-temperature radiator 7 is opened, and a channel from the first three-way valve to the heater core 4 is opened. The heating water pump 11 is started, the cooling liquid flows through the first three-way valve and separately enters the low-temperature radiator 7 and the heater core 4 under the action of the heating water pump 11, in the low-temperature radiator 7, the cooling liquid exchanges heat with outside air, in the heater core 4, the cooling liquid exchanges heat with air in the passenger compartment to heat the passenger compartment, the cooled cooling liquid enters the heating water pump 11 via the fourth port 4 of the third four-way valve 42 and the third port 3 of the third four-way valve 42.

When the thermal management system operates in the seventh working mode, the compressor 3 is started, the refrigerant enters the water-cooled condenser 12 under the action of the compressor 3, and exchanges heat with the cooling liquid flowing through the water-cooled condenser 12, and the cooled refrigerant separately enters the evaporator core 5 and the battery cooler 13. In the evaporator core 5, the cooled refrigerant exchanges heat with hot air in the passenger compartment to cool the passenger compartment. In the battery cooler 13, the cooled refrigerant exchanges heat with the cooling liquid flowing through the battery cooler 13 to cool the battery. The refrigerant flowing through the evaporator core 5 and the refrigerant flowing through the battery cooler 13 enter the water-cooled condenser 12 again through the compressor 3.

When the thermal management system operates in the eighth working mode, the first port 1 of the first three-way valve 14 and the third port 3 of the first three-way valve 14 are both opened, and the second port 2 of the first three-way valve 14 is closed.

When the thermal management system operates in the eighth working mode, the channel from the first three-way valve to the low-temperature radiator 7 is closed, and the channel from the first three-way valve to the heater core 4 is opened. The battery water pump 9 and the heating water pump 11 are both started, the cooling liquid flows through the power battery 1 and enters the water-cooled condenser 12 under the action of the battery water pump 9, and exchanges heat with the refrigerant flowing through the water-cooled condenser 12 in the water-cooled condenser 12, the heated cooling liquid enters the heater 8 through the heating water pump 11, and is further heated in the heater 8, the further heated cooling liquid enters the heater core 4 via the first three-way valve, and exchanges heat with air in the passenger compartment in the heater core 4, and the cooled cooling liquid enters the power battery 1 through the battery water pump 9.

When the thermal management system operates in the eighth working mode, the motor water pump 10 is started, the cooling liquid enters the battery cooler 13 under the action of the motor water pump 10, and exchanges heat with the refrigerant flowing through the battery cooler 13 in the battery cooler 13, and the cooled cooling liquid enters the motor water pump 10 through the motor 2.

When the thermal management system operates in the eighth working mode, the compressor 3 is started, the refrigerant enters the water-cooled condenser 12 under the action of the compressor 3 and exchanges heat with the cooling liquid flowing through the water-cooled condenser 12, the cooled refrigerant enters the battery cooler 13, in the battery cooler 13, the cooled refrigerant exchanges heat with the cooling liquid flowing through the battery cooler 13 to cool the battery, and the refrigerant flowing through the battery cooler 13 enters the water-cooled condenser 12 again through the compressor 3.

In some embodiments, the cooled refrigerant enters the receiver-drier for drying, and enters the battery cooler 13 after being throttled and cooled by the throttling apparatus.

When the thermal management system operates in the ninth working mode, the first port 1 of the first three-way valve 14, the second port 2 of the first three-way valve 14, and the third port 3 of the first three-way valve 14 are all opened.

When the thermal management system operates in the ninth working mode, the battery water pump 9 is started, and the cooling liquid flows through the power battery 1 and enters the battery water pump 9 under the action of the battery water pump 9.

When the thermal management system operates in the ninth working mode, the motor water pump 10 is started, the cooling liquid enters the battery cooler 13 under the action of the motor water pump 10, and exchanges heat with the refrigerant flowing through the battery cooler 13 in the battery cooler 13, the cooled cooling liquid enters the motor radiator 6 and exchanges heat with outside air in the motor radiator 6, and the further cooled cooling liquid enters the motor 2. A flow rate of the cooling liquid flowing through the motor radiator 6 may be adjusted according to an actual situation.

When the thermal management system operates in the ninth working mode, the heating water pump 11 is started, the channel from the first three-way valve to the low-temperature radiator 7 is opened, the channel from the three-way valve to the heater core 4 is opened, the cooling liquid separately enters the low-temperature radiator 7 and the heater core 4 via the first three-way valve under the action of the heating water pump 11, in the low-temperature radiator 7, the cooling liquid exchanges heat with outside air, in the heater core 4, the cooling liquid exchanges heat with air in the passenger compartment, the cooled cooling liquid enters the water-cooled condenser 12 and exchanges heat with the refrigerant flowing through the water-cooled condenser 12, and the heated cooling liquid enters the heating water pump 11 again.

When the thermal management system operates in the ninth working mode, the compressor 3 is started, the refrigerant enters the water-cooled condenser 12 under the action of the compressor 3 and exchanges heat with the cooling liquid flowing through the water-cooled condenser 12, the cooled refrigerant separately enters the evaporator core 5 and the battery cooler 13, in the evaporator core 5, the cooled refrigerant absorbs water vapor from the surrounding air to dry it, so as to dehumidify the passenger compartment, in the battery cooler 13, the cooled refrigerant exchanges heat with the cooling liquid flowing through the battery cooler 13 of the battery loop to cool the battery, and the refrigerant flowing through the evaporator core 5 and the refrigerant flowing through the battery cooler 13 enter the water-cooled condenser 12 again through the compressor 3.

When the thermal management system operates in the tenth working mode, the first port 1 of the first three-way valve 14, the second port 2 of the first three-way valve 14, and the third port 3 of the first three-way valve 14 are all opened.

When the thermal management system operates in the tenth working mode, the power battery 1, the motor 2, the heater core 4, the motor radiator 6, the low-temperature radiator 7, the three-way valve, the battery water pump 9, the motor water pump, the heating water pump 11, the water-cooled condenser 12, the battery cooler 13, the nine-way valve 30, and the heater 8 are connected in series via water pipes, and the battery water pump 9, the motor water pump 10, and the heating water pump 11 are started.

It may be understood that to meet different thermal management requirements of the vehicle, the thermal management system 100 in the embodiments of the present application adopts the first four-way valve 40, the second four-way valve 41, the third four-way valve 42, and the second three-way valve 43, to achieve the sixth working mode, the seventh working mode, the eighth working mode, the ninth working mode, and the tenth working mode, so as to meet thermal management requirements of the vehicle in different scenarios.

In a design, to meet lightweight requirements for vehicles, the thermal management system 100 in the embodiments of the present application further include a flow channel plate. The battery water pump 9, the motor water pump 10, the heating water pump 11, the water-cooled condenser 12, the battery cooler 13, and the connector 15 are integrated on the flow channel plate.

In some embodiments, the connector 15 is the foregoing nine-way valve 30. Connection relationships among the battery water pump 9, the motor water pump 10, the heating water pump 11, the water-cooled condenser 12, the battery cooler 13, and the nine-way valve 30 are as those described above.

In some embodiments, the connector 15 includes the foregoing first four-way valve 40, the foregoing second four-way valve 41, the foregoing third four-way valve 42, and the foregoing second three-way valve 43. Connection relationships among the battery water pump 9, the motor water pump 10, the heating water pump 11, the water-cooled condenser 12, the battery cooler 13, the first four-way valve 40, the second four-way valve 41, the third four-way valve 42, and the second three-way valve 43 are as those described above.

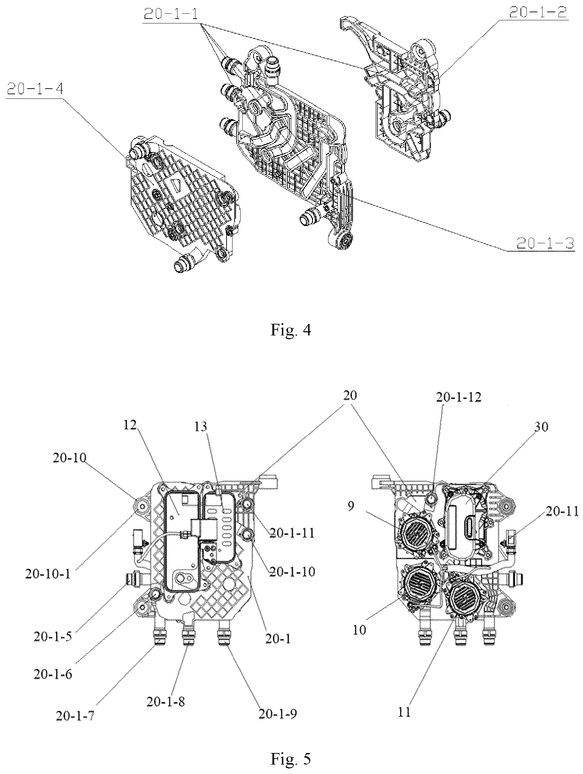

Exemplarily, as shown in Fig. 4, the thermal management system includes a flow channel plate 20-1, which has a plurality of internal flow channels 20-1-1. A size of each flow channel falls within a pre-set value range. For example, the flow channel has a width of 20-30 mm, a heigh of 8-20 mm, and a wall thickness of 3-5 mm.

Exemplarily, as shown in Fig. 4, the flow channel plate 20-1 includes an upper flow channel plate 20-1-2, a middle flow channel plate 20-1-3, and a lower flow channel plate 20-1-4. The flow channel plate 20-1 is made of plastic, which includes at least one of more than 50% polyamide (PA), polyphenylene sulfide (PPS), and polypropylene (PP). The upper flow channel plate 20-1-2, the middle flow channel plate 20-1-3, and the lower channel plate 20-1-4 are respectively first manufactured by integrated thermoforming and then welded together by hot melt welding.

The flow channel plate 20-1 further includes a plurality of water pipe connectors.

Exemplarily, as shown in Fig. 5, the flow channel plate 20-1 includes eight water pipe connectors: a first water pipe connector 20-1-5, a second water pipe connector 20-1-6, a third water pipe connector 20-1-7, a fourth water pipe connector 20-1-8, a fifth water pipe connector 20-1-9, a sixth water pipe connector 20-1-10, a seventh water pipe connector 20-1-11, and an eighth water pipe connector 20-1-12. The first water pipe connector 20-1-5 is connected to an outlet of the water reservoir, the second water pipe connector 20-1-6 is connected to the outlet of the motor 2, the third water pipe connector 20-1-7 is connected to the outlet of the motor radiator 6, the fourth water pipe connector 20-1-8 is connected to the inlet of the heater 8, the fifth water pipe connector 20-1-9 is connected to the outlet of the low-temperature radiator 7, the sixth water pipe connector 20-1-10 is connected to the outlet of the power battery 1, the seventh water pipe connector 20-1-11 is connected to the inlet of the power battery 1, and the eighth water pipe connector 20-1-12 is connected to the inlet of the motor radiator 6.

In some embodiments, the water pipe connectors may be made of plastic or metal. If the water pipe connectors are made of plastic, each water pipe connector contains more than a pre-set percentage (such as 50%) of PP. The water pipe connectors are formed by injection molding and have quick-connect structures, with dimensions following, for example, VDA-NW16 standard. The water pipe connectors are weld on the flow channel plate 20-1 by hot melt welding. As shown in Fig. 5, the flow channel plate 20-1 further includes a mounting point 20-10. The mounting point 20-10 is provided with a shock-absorbing structure 20-10-1.

Exemplarily, the shock-absorbing structure has an outer diameter of 25 mm and a height of 22; or has an outer diameter of 26 mm and a height of 23 mm. This is not specifically defined in the embodiments of the present application.

In Fig. 5, the water-cooled condenser 12, the battery cooler 13, the heating water pump 11, the battery water pump 9, the motor water pump 10, and the nine-way valve 30 that are integrated are further exemplarily illustrated.

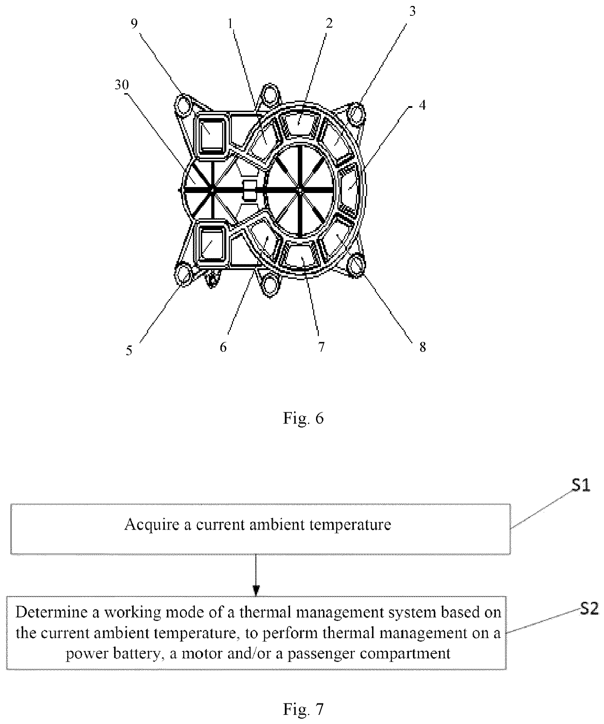

Exemplarily, as shown in Fig. 6, the nine-way valve 30 includes a first port 1, a second port 2, a third port 3, a fourth port 4, a fifth port 5, a sixth port 6, a seventh port 7, an eighth port 8, and a ninth port 9.

In a case that the flow channel plate 20-1 includes a plurality of water pipe connectors, connection relationships among the elements in the thermal management system 100: the battery water pump 9, the motor water pump 10, the heating water pump 11, the water-cooled condenser 12, the battery cooler 13, the nine-way valve 30, and the flow channel plate 20-1 are as follows:
The refrigerant inlet of the water-cooled condenser 12 is connected to the outlet of the compressor 3, and the refrigerant outlet of the water-cooled condenser 12 is connected to the inlet of the receiver-drier. The cooling liquid outlet of the water-cooled condenser 12 is connected to the inlet of the heater 8, and the cooling liquid outlet of the water-cooled condenser 12 is connected to the inlet of the heating water pump 11.

The refrigerant outlet of the battery cooler 13 is connected to the inlet of the compressor 3, and the refrigerant inlet of the battery cooler 13 is connected to the outlet of the receiver-drier. The cooling liquid inlet of the battery cooler 13 is connected to the third port 3 of the nine-way valve 30, and the cooling liquid outlet of the battery cooler 13 is connected to the fourth port 4 of the nine-way valve 30.

The battery water pump 9, the motor water pump 10, and the heating water pump 11 are respectively fastened onto the flow channel plate 20-1 via bolts in a radial sealing or end surface sealing manner. The outlet of the heating water pump 11 is connected to the inlet of the heater 8, and the cooling liquid inlet of the water-cooled condenser 12 is connected to the seventh port 7 of the nine-way valve 30 via the internal channel of the flow channel plate 20-1. The outlet of the battery water pump 9 is connected to the cooling liquid inlet of the power battery 1, and the inlet of the battery water pump 9 is connected to the second port 2 of the nine-way valve 30 via the internal channel of the flow channel plate 20-1. The inlet of the motor water pump 10 is connected to the cooling liquid outlet of the motor 2, and the outlet of the motor water pump 10 is connected to the first port 1 of the nine-way valve 30 via the internal channel of the flow channel plate 20-1.

The first port 1 to the ninth port 9 of the nine-way valve 30 are respectively communicated with the internal flow channels of the flow channel plate 20-1 The fifth port 5 of the nine-way valve 30 shares a common valve with the ninth port 9 of the nine-way valve 30. An opening percentage of the valve is adjustable within a range of 0% to 100%. The outlet of the power battery 1 is connected to the eighth port 8 of the nine-way valve 30 via the internal channel of the flow channel plate 20-1, the outlet of the heater core 4 is connected to the sixth port 6 of the nine-way valve 30 via the internal channel of the flow channel plate 20-1, and the outlet of the low-temperature radiator 7 is connected to the sixth port 6 of the nine-way valve 30 via the internal channel of the flow channel plate 20-1. The inlet of the motor 2 is connected to the ninth port 9 of the nine-way valve 30 via the internal channel of the flow channel plate 20-1, and the inlet of the motor radiator 6 is connected to the fifth port 5 of the nine-way valve 30 via the internal channel of the flow channel plate 20-1.

When the thermal management system operates in the first working mode, the first port 1 of the nine-way valve 30 is communicated with the fifth port 5 of the nine-way valve 30, the second port 2 of the nine-way valve 30 is communicated with the fourth port 4 of the nine-way valve 30, the third port 3 of the nine-way valve 30 is communicated with the eighth port 8 of the nine-way valve 30, the sixth port 6 of the nine-way valve 30 is communicated with the seventh port 7 of the nine-way valve 30, the ninth port 9 of the nine-way valve 30 is closed, the first port 1 of the three-way valve and the second port 2 of the three-way valve are both opened, and the third port 3 of the three-way valve is closed.

The second water pipe connector 20-1-6 of the flow channel plate 20-1 is communicated with the eighth water pipe connector 20-1-12 via the internal flow channel, the fourth water pipe connector 20-1-8 is communicated with the fifth water pipe connector 20-1-9 via the internal flow channel, and the sixth water pipe connector 20-1-10 is communicated with the seventh water pipe connector 20-1-11 via the internal flow channel.

When the thermal management system operates in the first working mode, the battery water pump 9 is started, and the cooling liquid flows through the power battery 1 and enters the battery cooler 13 via the eighth port 8 of the nine-way valve 30 and the third port 3 of the nine-way valve 30 under the action of the battery water pump 9. Further, the cooling liquid exchanges heat with the refrigerant flowing through the battery cooler 13. Subsequently, the cooled cooling liquid flows back to the battery water pump 9 via the fourth port 4 of the nine-way valve 30 and the second port 2 of the nine-way valve 30.

When the thermal management system operates in the first working mode, the motor water pump 10 is started, the cooling liquid enters the motor radiator 6 via the first port 1 of the nine-way valve 30 and the fifth port 5 of the nine-way valve 30 under the action of the motor water pump 10, and exchanges heat with outside air in the motor radiator 6, and the cooled cooling liquid enters the motor 2 to cool the motor 2, and flows back to the motor water pump 10.

When the thermal management system operates in the first working mode, the heating water pump 11 is started, the cooling liquid flows through the first three-way valve and enters the low-temperature radiator 7 under the action of the heating water pump 11, and exchanges heat with outside air, the cooled cooling liquid enters the water-cooled condenser 12 via the sixth port 6 of the nine-way valve 30 and the seventh port 7 of the nine-way valve 30, and exchanges heat with the refrigerant flowing through the water-cooled condenser 12, and the heated cooling liquid enters the low-temperature radiator 7 again through the heating water pump 11.

When the thermal management system operates in the first working mode, the compressor 3 is started, the refrigerant enters the water-cooled condenser 12 under the action of the compressor 3, and exchanges heat with the cooling liquid flowing through the water-cooled condenser 12, and the cooled refrigerant separately enters the evaporator core 5 and the battery cooler 13. In the evaporator core 5, the cooled refrigerant exchanges heat with hot air in the passenger compartment to cool the passenger compartment. In the battery cooler 13, the cooled refrigerant exchanges heat with the cooling liquid flowing through the battery cooler 13 to cool the battery. The refrigerant flowing through the evaporator core 5 and the refrigerant flowing through the battery cooler 13 enter the water-cooled condenser 12 again through the compressor 3.

When the thermal management system operates in the second working mode, the first port 1 of the nine-way valve 30 is communicated with the third port 3 of the nine-way valve 30, the second port 2 of the nine-way valve 30 is communicated with the fourth port 4 of the nine-way valve 30, the fifth port 5 of the nine-way valve 30 is communicated with the eighth port 8 of the nine-way valve 30, the sixth port 6 of the nine-way valve 30 is communicated with the seventh port 7 of the nine-way valve 30, the ninth port 9 of the nine-way valve 30 is opened, and the first port 1 of the first three-way valve, the second port 2 of the first three-way valve, and the third port 3 of the first three-way valve are all opened.

In some embodiments, an opening percentage of the ninth port 9 of the nine-way valve 30 falls within a first pre-set range.

Exemplarily, the first pre-set range is 30% to 50%.

For example, the opening percentage of the ninth port of the nine-way valve 30 is 36%.

The second water pipe connector 20-1-6 of the flow channel plate 20-1 is communicated with the sixth water pipe connector 20-1-10 via the internal flow channel, the fourth water pipe connector 20-1-8 is communicated with the fifth water pipe connector 20-1-9 via the internal flow channel, and the seventh water pipe connector 20-1-11 is communicated with the eighth water pipe connector 20-1-12 via the internal flow channel.

When the thermal management system operates in the second working mode, the battery water pump 9 and the motor water pump 10 are both started, the cooling liquid flows through the power battery 1 and enters the motor radiator 6 via the eighth port 8 of the nine-way valve 30 and the fifth port 5 of the nine-way valve 30 under the action of the battery water pump 9, and exchanges heat with outside air, and the cooled cooling liquid enters the motor water pump 10 through the motor 2. The cooling liquid enters the battery cooler 13 via the first port 1 of the nine-way valve 30 and the third port 3 of the nine-way valve 30 under the action of the motor water pump 10, exchanges heat with the refrigerant flowing through the battery cooler 13 in the battery cooler 13, and enters the power battery 1 under the action of the battery water pump 9.

When the thermal management system operates in the second working mode, a channel from the first three-way valve to the low-temperature radiator 7 is opened, and a channel from the first three-way valve to the heater core 4 is opened. The heating water pump 11 is started, the cooling liquid flows through the first three-way valve and separately enters the low-temperature radiator 7 and the heater core 4 under the action of the heating water pump 11, in the low-temperature radiator 7, the cooling liquid exchanges heat with outside air, in the heater core 4, the cooling liquid exchanges heat with air in the passenger compartment to heat the passenger compartment, the cooled cooling liquid enters the water-cooled condenser 12 via the sixth port 6 of the nine-way valve 30 and the seventh port 7 of the nine-way valve 30 and exchanges heat with the refrigerant flowing through the water-cooled condenser 12, and the heated cooling liquid enters the low-temperature radiator 7 again through the heating water pump 11.

When the thermal management system operates in the second working mode, the compressor 3 is started, the refrigerant enters the water-cooled condenser 12 under the action of the compressor 3 and exchanges heat with the cooling liquid flowing through the water-cooled condenser 12, the cooled refrigerant separately enters the evaporator core 5 and the battery cooler 13, in the evaporator core 5, the cooled refrigerant exchanges heat with hot air in the passenger compartment to cool the passenger compartment, in the battery cooler 13, the cooled refrigerant exchanges heat with the cooling liquid flowing through the battery cooler 13 of the battery loop to cool the battery, and the refrigerant flowing through the evaporator core 5 and the refrigerant flowing through the battery cooler 13 enter the water-cooled condenser 12 again through the compressor 3.

In some embodiments, the cooled refrigerant enters the receiver-drier for drying, and separately enters the evaporator core 5 and the battery cooler 13 after being throttled and cooled by a throttling apparatus.

Exemplarily, the throttling apparatus is an expansion valve.

When the thermal management system operates in the third working mode, the first port 1 of the nine-way valve 30 is communicated with the third port 3 of the nine-way valve 30, the second port 2 of the nine-way valve 30 is communicated with the sixth port 6 of the nine-way valve 30, the fourth port 4 of the nine-way valve 30 is communicated with the ninth port 9 of the nine-way valve 30, the eighth port 8 of the nine-way valve 30 is communicated with the seventh port 7 of the nine-way valve 30, the fifth port 5 of the nine-way valve 30 is closed, the first port 1 of the first three-way valve and the third port 3 of the first three-way valve are both opened, and the second port 2 of the three-way valve is closed.

The second water pipe connector 20-1-6 of the flow channel plate 20-1 is communicated with the eighth water pipe connector 20-1-12 via the internal flow channel, the fourth water pipe connector 20-1-8 is communicated with the seventh water pipe connector 20-1-11 via the internal flow channel, and the fifth water pipe connector 20-1-9 is communicated with the sixth water pipe connector 20-1-10 via the internal flow channel.

When the thermal management system operates in the third working mode, the channel from the first three-way valve to the low-temperature radiator 7 is closed, and the channel from the first three-way valve to the heater core 4 is opened. The battery water pump 9 and the heating water pump 11 are both started, the cooling liquid flows through the power battery 1 and enters the water-cooled condenser 12 via the eighth port 8 of the nine-way valve 30 and the seventh port 7 of the nine-way valve 30 under the action of the battery water pump 9, and exchanges heat with the refrigerant flowing through the water-cooled condenser 12 in the water-cooled condenser 12, the heated cooling liquid enters the heater 8 through the heating water pump 11, and is further heated in the heater 8, the further heated cooling liquid enters the heater core 4 via the first three-way valve, and exchanges heat with air in the passenger compartment in the heater core 4, and the cooled cooling liquid enters the power battery 1 through the battery water pump 9.

When the thermal management system operates in the third working mode, the motor water pump 10 is started, the cooling liquid enters the battery cooler 13 via the first port 1 of the nine-way valve 30 and the third port 3 of the nine-way valve 30 under the action of the motor water pump 10, and exchanges heat with the refrigerant flowing through the battery cooler 13 in the battery cooler 13, and the cooled cooling liquid enters the motor water pump 10 through the motor 2.

When the thermal management system operates in the third working mode, the compressor 3 is started, the refrigerant enters the water-cooled condenser 12 under the action of the compressor 3 and exchanges heat with the cooling liquid flowing through the water-cooled condenser 12, the cooled refrigerant enters the battery cooler 13, in the battery cooler 13, the cooled refrigerant exchanges heat with the cooling liquid flowing through the battery cooler 13 to cool the battery, and the refrigerant flowing through the battery cooler 13 enters the water-cooled condenser 12 again through the compressor 3.

In some embodiments, the cooled refrigerant enters the receiver-drier for drying, and enters the battery cooler 13 after being throttled and cooled by the throttling apparatus.

When the thermal management system operates in the fourth working mode, the first port 1 of the nine-way valve 30 is communicated with the third port 3 of the nine-way valve 30, the second port 2 of the nine-way valve 30 is communicated with the eighth port 8 of the nine-way valve 30, the fifth port 5 of the nine-way valve 30 is communicated with the fourth port 4 of the nine-way valve 30, the sixth port 6 of the nine-way valve 30 is communicated with the seventh port 7 of the nine-way valve 30, the ninth port 9 of the nine-way valve 30 is opened, and the first port 1 of the three-way valve, the second port 2 of the three-way valve, and the third port 3 of the three-way valve are all opened.

In some embodiments, an opening percentage of the ninth port 9 of the nine-way valve 30 falls within a second pre-set range.

Exemplarily, the second pre-set range is 30% to 50%.

For example, the opening percentage of the ninth port of the nine-way valve 30 is 36%.

The second water pipe connector 20-1-6 of the flow channel plate 20-1 is communicated with the eighth water pipe connector 20-1-12 via the internal flow channel, the fourth water pipe connector 20-1-8 is communicated with the fifth water pipe connector 20-1-9 via the internal flow channel, and the seventh water pipe connector 20-1-11 is communicated with the sixth water pipe connector 20-1-10 via the internal flow channel.

When the thermal management system operates in the fourth working mode, the battery water pump 9 is started, and the cooling liquid flows through the power battery 1 and enters the battery water pump 9 via the nine-way valve 30 under the action of the battery water pump 9.

When the thermal management system operates in the fourth working mode, the motor water pump 10 is started, the cooling liquid enters the battery cooler 13 via the first port 1 of the nine-way valve 30 and the third port 3 of the nine-way valve 30 under the action of the motor water pump 10, and exchanges heat with the refrigerant flowing through the battery cooler 13 in the battery cooler 13, the cooled cooling liquid enters the motor radiator 6 via the fourth port 4 of the nine-way valve 30 and the fifth port 5 of the nine-way valve 30, and exchanges heat with outside air in the motor radiator 6, and the further cooled cooling liquid enters the motor 2. A flow rate of the cooling liquid flowing through the motor radiator 6 may be adjusted according to an actual situation.

When the thermal management system operates in the fourth working mode, the heating water pump 11 is started, the channel from the three-way valve to the low-temperature radiator 7 is opened, the channel from the three-way valve to the heater core 4 is opened, the cooling liquid separately enters the low-temperature radiator 7 and the heater core 4 via the three-way valve under the action of the heating water pump 11, in the low-temperature radiator 7, the cooling liquid exchanges heat with outside air, in the heater core 4, the cooling liquid exchanges heat with air in the passenger compartment, the cooled cooling liquid enters the water-cooled condenser 12 after converging via the sixth port 6 of the nine-way valve 30 and the seventh port 7 of the nine-way valve 30, and exchanges heat with the refrigerant flowing through the water-cooled condenser 12, and the heated cooling liquid enters the heating water pump 11 again.

When the thermal management system operates in the fourth working mode, the compressor 3 is started, the refrigerant enters the water-cooled condenser 12 under the action of the compressor 3 and exchanges heat with the cooling liquid flowing through the water-cooled condenser 12, the cooled refrigerant separately enters the evaporator core 5 and the battery cooler 13, in the evaporator core 5, the cooled refrigerant absorbs water vapor from the surrounding air to dry it, so as to dehumidify the passenger compartment, in the battery cooler 13, the cooled refrigerant exchanges heat with the cooling liquid flowing through the battery cooler 13 of the battery loop to cool the battery, and the refrigerant flowing through the evaporator core 5 and the refrigerant flowing through the battery cooler 13 enter the water-cooled condenser 12 again through the compressor 3.

In some embodiments, the cooled refrigerant enters the receiver-drier for drying, and separately enters the evaporator core 5 and the battery cooler 13 after being throttled and cooled by the throttling apparatus.

When the thermal management system operates in the fifth working mode, the first port 1 of the nine-way valve 30 is communicated with the second port 2 of the nine-way valve 30, the fourth port 4 of the nine-way valve 30 is communicated with the seventh port 7 of the nine-way valve 30, the fifth port 5 of the nine-way valve 30 is communicated with the sixth port 6 of the nine-way valve 30, the third port 3 of the nine-way valve 30 is communicated with the eighth port 8 of the nine-way valve 30, the fifth port 5 of the nine-way valve 30 is closed, and the first port 1 of the three-way valve, the second port 2 of the three-way valve, and the third port 3 of the three-way valve are all opened.

The second water pipe connector 20-1-6 of the flow channel plate 20-1 is communicated with the sixth water pipe connector 20-1-10 via the internal flow channel, the fourth water pipe connector 20-1-8 is communicated with the seventh water pipe connector 20-1-11 via the internal flow channel, and the fifth water pipe connector 20-1-9 is communicated with the eighth water pipe connector 20-1-12 via the internal flow channel.

When the thermal management system operates in the fifth working mode, the power battery 1, the motor 2, the heater core 4, the motor radiator 6, the low-temperature radiator 7, the three-way valve, the battery water pump 9, the motor water pump 10, the heating water pump 11, the water-cooled condenser 12, the battery cooler 13, the nine-way valve 30, and the heater 8 are connected in series via water pipes, and the battery water pump 9, the motor water pump 10, and the heating water pump 11 are started.

It may be understood that to meet different thermal management requirements of the vehicle, the thermal management system 100 in the embodiments of the present application operates in five working modes: the first working mode, the second working mode, the third working mode, the fourth working mode, and the fifth working mode. Therefore, the thermal management system can meet thermal management requirements of vehicles in different scenarios.

It may be understood that the battery water pump 9, the motor water pump 10, the heating water pump 11, the water-cooled condenser 12, the battery cooler 13, and the connector 15 are integrally disposed on the flow channel plate 20-1, thereby reducing mounting bracket parts and meeting lightweight requirements for vehicles. In addition, by adopting the flow channel plate 20-1, sealing points of the water pipeline and the water pipe connectors are reduced, and the occupied engine compartment space is reduced, making the entire vehicle more reliable. Furthermore, the thermal management system 100 has a high integration level and requires short assembly time, and the water pipe connectors have quick-connect structures, which are easy to assemble.

In some designs, to protect the thermal management system 100, the thermal management system 100 further includes a receiver-drier. An inlet of the receiver-drier is connected to the refrigerant outlet of the water-cooled condenser, and an outlet of the receiver-drier is connected to the inlet of the evaporator core 5.

It may be understood that the receiver-drier absorbs moisture in a sealed HVAC pipeline, and filters out tiny impurities in the pipeline, to protect the thermal management system 100.

In some designs, to replenish the cooling liquid timely, the thermal management system 100 further includes a water reservoir. An outlet of the water reservoir is separately connected to the motor 2 and the motor water pump 10.

It may be understood that the cooling liquid is replenished from the water reservoir to the thermal management system 100, to ensure stable operations of the thermal management system 100.

In a design, the thermal management system 100 further includes at least one fan. The fans are disposed at positions respectively corresponding to the low-temperature radiator 7 and the motor radiator 6.

In some embodiments, the fans may be further disposed at positions respectively corresponding to the heater core 4 and the evaporator core 5.

In a design, the thermal management system 100 further includes temperature-pressure sensors and temperature sensors.

Exemplarily, the temperature sensor is connected to the inlet of the power battery 1. The temperature-pressure sensor is connected to the inlet of the compressor 3. The temperature sensor is connected to the cooling liquid inlet of the motor 2. The temperature-pressure sensor is connected to the cooling liquid outlet of the evaporator core 5.

In a design, to meet lightweight requirements for new energy automobiles and meet thermal management requirements in multiple scenarios, the embodiments of the present application provide a control method for a thermal management system 100. The thermal management system 100 includes the foregoing thermal management system 100, and as shown in Fig. 7, the control method includes S1 and S2.

S1: Acquire a current ambient temperature.

As a possible implementation, the current ambient temperature is acquired in real time or periodically.

S2: Determine a working mode of the thermal management system 100 based on the current ambient temperature, to perform thermal management on the power battery 1, the motor 2 and/or a passenger compartment.

As a possible implementation, in a case that the current ambient temperature is acquired, the working mode of the thermal management system 100 is determined based on the current ambient temperature, to perform thermal management on the power battery 1, the motor 2 and/or the passenger compartment.

In some embodiments, in a case that the current ambient temperature is acquired, a temperature range within which the current ambient temperature falls is determined. If the current ambient temperature is greater than or equal to a first pre-set threshold, it is determined that the current ambient temperature falls within a first temperature range, and the thermal management system 100 is controlled to operate in the first working mode. If the current ambient temperature is greater than or equal to a second pre-set threshold and is less than the first pre-set threshold, it is determined that the current ambient temperature falls within a second temperature range, and the thermal management system 100 is controlled to operate in the second working mode or the fourth working mode. If the current ambient temperature is less than the second pre-set threshold, it is determined that the current ambient temperature falls within a third temperature range, and the thermal management system 100 is controlled to operate in the third working mode or the fourth working mode.

In some embodiments, if the current ambient temperature is greater than or equal to the second pre-set threshold and is less than the first pre-set threshold, and the power battery 1 is in a cooling mode, the thermal management system 100 is controlled to operate in the second working mode. If the current ambient temperature is greater than or equal to the second pre-set threshold and is less than the first pre-set threshold, and the power battery 1 is in a temperature equalization mode, the thermal management system 100 is controlled to operate in the fourth working mode. If the current ambient temperature is less than the second pre-set threshold and the power battery 1 is in a heating mode, the thermal management system 100 is controlled to operate in the third working mode. If the current ambient temperature is less than the second pre-set threshold and the power battery 1 is in the temperature equalization mode, the thermal management system 100 is controlled to operate in the fourth working mode.

In some other embodiments, in a case that the current ambient temperature is acquired, whether the current ambient temperature is greater than or equal to the first pre-set threshold is determined. If the current ambient temperature is greater than or equal to the first pre-set threshold, the thermal management system 100 is controlled to operate in the first working mode. If the current ambient temperature is less than the first pre-set threshold, whether the current ambient temperature is greater than or equal to the second threshold and is less than the first pre-set threshold is determined. If it is determined that the current ambient temperature is greater than or equal to the second pre-set threshold and is less than the first pre-set threshold, the thermal management system 100 is controlled to operate in the second working mode or the fourth working mode. If the current ambient temperature is less than the second pre-set threshold, the thermal management system 100 is controlled to operate in the third working mode or the fourth working mode.

Exemplarily, the first pre-set threshold may be 25°C, and the second pre-set threshold may be 10°C; or the first pre-set threshold may be 28°C, and the second pre-set threshold may be 8°C. The first pre-set threshold and the second pre-set threshold are not specifically defined in the embodiments of the present application, and may be set by operation and maintenance staff according to different situations.

In another case, current time is acquired, and a season corresponding to the current time is determined. If the season corresponding to the current time is summer, the thermal management system 100 operates in the first working mode. If the season corresponding to the current time is spring/autumn and the power battery 1 requires cooling, the thermal management system 100 operates in the second working mode. If the season corresponding to the current time is spring/autumn and the power battery 1 requires temperature equalization, the thermal management system 100 operates in the fourth working mode. If the season corresponding to the current time is winter and the power battery 1 requires heating, the thermal management system 100 operates in the third working mode. If the season corresponding to the current time is winter and the power battery 1 requires temperature equalization, the thermal management system 100 operates in the fourth working mode.

It may be understood that the thermal management system 100 determines the working mode of the thermal management system 100 according to different temperatures, to perform thermal management on the power battery 1, the motor 2 and/or the passenger compartment. The thermal management system 100 meets not only lightweight requirements for new energy automobiles, but also thermal management requirements in multiple scenarios.

In a design, to accurately perform thermal management on a vehicle, S2 in the embodiments of the present application specifically includes S201 to S203.

S201: If the current ambient temperature is greater than or equal to the first pre-set threshold, control the thermal management system 100 to operate in the first working mode.

Exemplarily, the current ambient temperature is 28°C, and the first pre-set threshold is 26°C. If the current ambient temperature (28°C) is greater than the first pre-set threshold (26°C), the thermal management system 100 is controlled to operate in the first working mode, to cool the battery, the motor 2, and the passenger compartment.

S202: If the current ambient temperature is greater than or equal to the second pre-set threshold and is less than the first pre-set threshold, control the thermal management system 100 to operate in the second working mode or the fourth working mode.

As a possible implementation, if the current ambient temperature is greater than or equal to the second pre-set threshold and is less than the first pre-set threshold, the thermal management system 100 is controlled to operate in the second working mode or the fourth working mode.

As a possible implementation, if the current ambient temperature is less than the second pre-set threshold, a demand mode of the power battery 1 is acquired. If the demand mode of the power battery 1 is the cooling mode, the thermal management system 100 is controlled to operate in the second working mode. If the demand mode of the power battery 1 is the temperature equalization mode, the thermal management system 100 is controlled to operate in the fourth working mode.

In some embodiments, if the current ambient temperature is greater than or equal to the second pre-set threshold and is less than the first pre-set threshold, a temperature of the power battery 1 is acquired. In a case that the temperature of the power battery 1 is greater than a third pre-set threshold, it is determined that the demand mode of the power battery 1 is the cooling mode, and the thermal management system 100 is controlled to operate in the second working mode. In a case that a temperature difference of the power battery 1 is greater than a fourth pre-set threshold, it is determined that the demand mode of the power battery 1 is the temperature equalization mode, and the thermal management system 100 is controlled to operate in the fourth working mode.

In some embodiments, if the current ambient temperature is greater than or equal to the second pre-set threshold and is less than the first pre-set threshold, the thermal management system responds to a user operation. If the user operation is a cooling mode activation operation, the thermal management system operates in the second working mode. If the user operation is a temperature equalization mode activation operation, the thermal management system operates in the fourth working mode.

S203: If the current ambient temperature is less than the second pre-set threshold, control the thermal management system 100 to operate in the third working mode or the fourth working mode.

As a possible implementation, if the current ambient temperature is less than the second pre-set threshold, the thermal management system 100 is controlled to randomly operate in the third working mode or the fourth working mode.

As a possible implementation, if the current ambient temperature is less than the second pre-set threshold, a demand mode of the power battery 1 is acquired. If the demand mode of the power battery 1 is the heating mode, the thermal management system 100 is controlled to operate in the third working mode. If the demand mode of the power battery 1 is the temperature equalization mode, the thermal management system 100 is controlled to operate in the fourth working mode.

In some embodiments, if the current ambient temperature is less than the second pre-set threshold, a temperature of the power battery 1 is acquired. In a case that the temperature of the power battery 1 is less than a fifth pre-set threshold, it is determined that the demand mode of the power battery 1 is the heating mode, and the thermal management system 100 is controlled to operate in the third working mode. In a case that a temperature difference of the power battery 1 is greater than the fourth pre-set threshold, it is determined that the demand mode of the power battery 1 is the temperature equalization mode, and the thermal management system 100 is controlled to operate in the fourth working mode.

In some embodiments, if the current ambient temperature is less than the second pre-set threshold, the thermal management system responds to a user operation. If the user operation is a heating mode activation operation, the thermal management system operates in the third working mode. If the user operation is a temperature equalization mode activation operation, the thermal management system operates in the fourth working mode.

It may be understood that in the embodiments of the present application, the working mode of the thermal management system 100 is determined according to the current ambient temperature, to accurately perform thermal management on the vehicle, thereby improving user experience.

In a design, to accurately perform thermal management on a vehicle, S202 in the embodiments of the present application specifically includes S301 and S302.

S301: If the current ambient temperature is greater than or equal to the second pre-set threshold and is less than the first pre-set threshold, and the power battery 1 is in a cooling mode, control the thermal management system 100 to operate in the second working mode.

As a possible implementation, if the current ambient temperature is greater than or equal to the second pre-set threshold and is less than the first pre-set threshold, a temperature of the power battery 1 is acquired. In a case that the temperature of the power battery 1 is greater than the third pre-set threshold, it is determined that the demand mode of the power battery 1 is the cooling mode, and the thermal management system 100 is controlled to operate in the second working mode.

S302: If the current ambient temperature is greater than or equal to the second pre-set threshold and is less than the first pre-set threshold, and the power battery 1 is in a temperature equalization mode, control the thermal management system 100 to operate in the fourth working mode.

As a possible implementation, if the current ambient temperature is greater than or equal to the second pre-set threshold and is less than the first pre-set threshold, a temperature of the power battery 1 is acquired. In a case that a temperature difference of the power battery 1 is greater than the fourth pre-set threshold, it is determined that the demand mode of the power battery 1 is the temperature equalization mode, and the thermal management system 100 is controlled to operate in the fourth working mode.

S203 in the embodiments of the present application includes S303 and S304.

S303: If the current ambient temperature is less than the second pre-set threshold and the power battery 1 is in a heating mode, control the thermal management system 100 to operate in the third working mode.

As a possible implementation, if the current ambient temperature is less than the second pre-set threshold, a temperature of the power battery 1 is acquired. In a case that the temperature of the power battery 1 is less than the fifth pre-set threshold, it is determined that the demand mode of the power battery 1 is the heating mode, and the thermal management system 100 is controlled to operate in the third working mode.

S304: If the current ambient temperature is less than the second pre-set threshold and the power battery 1 is in the temperature equalization mode, control the thermal management system 100 to operate in the fourth working mode.

As a possible implementation, if the current ambient temperature is less than the second pre-set threshold, a temperature of the power battery 1 is acquired. In a case that a temperature difference of the power battery 1 is greater than the fourth pre-set threshold, it is determined that the demand mode of the power battery 1 is the temperature equalization mode, and the thermal management system 100 is controlled to operate in the fourth working mode.

It may be understood that the thermal management system 100 determines the working mode based on the current ambient temperature and the demand mode of the power battery 1, to preciously control thermal management of the vehicle.

In a design, to identity a fault in the thermal management system 100, the control method for the thermal management system 100 provided in the embodiments of the present application further includes S3.

S3: In response to an inspection operation, control the thermal management system 100 to operate in the fifth working mode.

As a possible implementation, in a case that the thermal management system 100 fails, in response to the inspection operation, the thermal management system 100 is controlled to operate in the fifth working mode.

It may be understood that when the thermal management system operates in the fifth working mode, multiple loops are maintained in an open state, to facilitate fault identification.

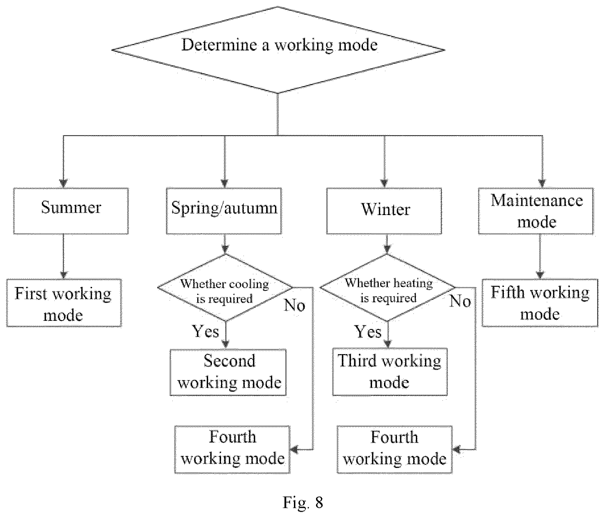

To provide a better understanding of the control method for the thermal management system 100 provided in the embodiments of the present application, as shown in Fig. 8, a process of determining a working mode of a thermal management system 100 is illustrated. A mode is determined. In some embodiments, mode determination is initiated upon vehicle startup.

As a possible implementation, a current ambient temperature is acquired, and if the current ambient temperature is greater than or equal to a second pre-set threshold and is less than a first pre-set threshold, and a power battery 1 is in a cooling mode, the thermal management system 100 is controlled to operate in the second working mode. If the current ambient temperature is greater than or equal to the second pre-set threshold and is less than the first pre-set threshold, and the power battery 1 is in a temperature equalization mode, the thermal management system 100 is controlled to operate in the fourth working mode. If the current ambient temperature is less than the second pre-set threshold and the power battery 1 is in a heating mode, the thermal management system 100 is controlled to operate in the third working mode. If the current ambient temperature is less than the second pre-set threshold and the power battery 1 is in the temperature equalization mode, the thermal management system 100 is controlled to operate in the fourth working mode.

In another possible implementation, current time is acquired, and a season corresponding to the current time is determined. If the season corresponding to the current time is summer, the thermal management system 100 operates in the first working mode. If the season corresponding to the current time is spring/autumn and the power battery 1 requires cooling, the thermal management system 100 operates in the second working mode. If the season corresponding to the current time is spring/autumn and the power battery 1 requires temperature equalization, the thermal management system 100 operates in the fourth working mode. If the season corresponding to the current time is winter and the power battery 1 requires heating, the thermal management system 100 operates in the third working mode. If the season corresponding to the current time is winter and the power battery 1 requires temperature equalization, the thermal management system 100 operates in the fourth working mode.

As another possible implementation, as shown in Fig. 8, the current ambient temperature is acquired, and if the current ambient temperature is greater than or equal to the first pre-set threshold, it is determined a current season is summer, and the thermal management system operates in the first working mode. If the current ambient temperature is greater than or equal to the second pre-set threshold and is less than the first pre-set threshold, it is determined that the current season is spring/autumn. Further, a mode of the power battery 1 is acquired. If the power battery 1 currently requires cooling, the thermal management system 100 operates in the second working mode. If the power battery 1 currently does not require cooling, the thermal management system 100 operates in the fourth working mode. If the current ambient temperature is less than the second pre-set threshold, it is determined that the current season is winter. If the power battery 1 currently requires heating, the thermal management system 100 operates in the third working mode. If the power battery 1 currently does not require heating, the thermal management system 100 operates in the fourth working mode.

In addition, if an inspection operation is detected, a detection mode is determined, and the thermal management system operates in the fifth working mode.

The embodiments of the present application further provide a vehicle, which includes the foregoing thermal management system 100.

The embodiments of the present application further provide a computer-readable storage medium, configured to store computer-readable instructions. A processor executes the computer-readable instructions, to perform the foregoing control method.

## Claims

1. A thermal management system, comprising a power battery, a motor, a heater core, a compressor, an evaporator core, a motor radiator, a low-temperature radiator, a heater, a battery water pump, a motor water pump, a heating water pump, a water-cooled condenser, a battery cooler, a multi-way valve, and a connector, wherein
the connector is separately connected to an outlet of the power battery, an inlet of the motor, an outlet of the heater core, an inlet of the motor radiator, an outlet of the low-temperature radiator, an inlet of the battery water pump, an outlet of the motor water pump, a cooling liquid inlet of the water-cooled condenser, a cooling liquid outlet of the battery cooler, and a cooling liquid inlet of the battery cooler; and
an input of the motor water pump is connected to an outlet of the motor, the inlet of the motor is connected to an outlet of the motor radiator, an outlet of the heater is separately connected to an inlet of the low-temperature radiator and an inlet of the heater core via the multi-way valve, an inlet of the heater is connected to a cooling liquid outlet of the water-cooled condenser, an outlet of the battery water pump is connected to an inlet of the power battery, an inlet of the evaporator core is connected to a refrigerant outlet of the water-cooled condenser, a refrigerant inlet of the water-cooled condenser is connected to a refrigerant outlet of the compressor, an inlet of the compressor is connected to an outlet of the evaporator core, a refrigerant outlet of the battery cooler is connected to a refrigerant inlet of the compressor, and a cooling liquid outlet of the heating water pump is connected to the inlet of the heater.

2. The thermal management system according to claim 1, wherein the multi-way valve is a first three-way valve, the connector is a nine-way valve, a first port of the nine-way valve is connected to the inlet of the motor water pump, a second port of the nine-way valve is connected to the inlet of the battery water pump, a third port of the nine-way valve is connected to the cooling liquid inlet of the battery cooler, a fourth port of the nine-way valve is connected to the cooling liquid outlet of the battery cooler, a fifth port of the nine-way valve is connected to the inlet of the motor radiator, a sixth port of the nine-way valve is separately connected to the outlet of the low-temperature radiator and the outlet of the heater core, a seventh port of the nine-way valve is connected to the cooling liquid inlet of the water-cooled condenser, an eighth port of the nine-way valve is connected to the outlet of the power battery, and a ninth port of the nine-way valve is connected to the inlet of the motor; and
a first port of the three-way valve is connected to the outlet of the heater, a second port of the three-way valve is connected to the inlet of the low-temperature radiator, and a third port of the three-way valve is connected to the inlet of the heater core.

3. The thermal management system according to claim 2, wherein the thermal management system operates in a first working mode, a second working mode, a third working mode, a fourth working mode, or a fifth working mode;
when the thermal management system operates in the first working mode, the first port of the nine-way valve is communicated with the fifth port of the nine-way valve, the second port of the nine-way valve is communicated with the fourth port of the nine-way valve, the third port of the nine-way valve is communicated with the eighth port of the nine-way valve, the sixth port of the nine-way valve is communicated with the seventh port of the nine-way valve, the ninth port of the nine-way valve is closed, the first port of the three-way valve and the second port of the three-way valve are both opened, and the third port of the three-way valve is closed;
when the thermal management system operates in the second working mode, the first port of the nine-way valve is communicated with the third port of the nine-way valve, the second port of the nine-way valve is communicated with the fourth port of the nine-way valve, the fifth port of the nine-way valve is communicated with the eighth port of the nine-way valve, the sixth port of the nine-way valve is communicated with the seventh port of the nine-way valve, the ninth port of the nine-way valve is opened, and the first port of the three-way valve, the second port of the three-way valve, and the third port of the three-way valve are all opened;
when the thermal management system operates in the third working mode, the first port of the nine-way valve is communicated with the third port of the nine-way valve, the second port of the nine-way valve is communicated with the sixth port of the nine-way valve, the fourth port of the nine-way valve is communicated with the ninth port of the nine-way valve, the eighth port of the nine-way valve is communicated with the seventh port of the nine-way valve, the fifth port of the nine-way valve is closed, the first port of the three-way valve and the third port of the three-way valve are both opened, and the second port of the three-way valve is closed;
when the thermal management system operates in the fourth working mode, the first port of the nine-way valve is communicated with the third port of the nine-way valve, the second port of the nine-way valve is communicated with the eighth port of the nine-way valve, the fifth port of the nine-way valve is communicated with the fourth port of the nine-way valve, the sixth port of the nine-way valve is communicated with the seventh port of the nine-way valve, the ninth port of the nine-way valve is opened, and the first port of the three-way valve, the second port of the three-way valve, and the third port of the three-way valve are all opened; or
when the thermal management system operates in the fifth working mode, the first port of the nine-way valve is communicated with the second port of the nine-way valve, the fourth port of the nine-way valve is communicated with the seventh port of the nine-way valve, the fifth port of the nine-way valve is communicated with the sixth port of the nine-way valve, the third port of the nine-way valve is communicated with the eighth port of the nine-way valve, the fifth port of the nine-way valve is closed, and the first port of the three-way valve, the second port of the three-way valve, and the third port of the three-way valve are all opened.

4. The thermal management system according to claim 1, wherein the multi-way valve is a first three-way valve, the connector comprises a first four-way valve, a second four-way valve, a third four-way valve, and a second three-way valve, a first port of the first four-way valve is connected to the inlet of the battery water pump, a second port of the first four-way valve is connected to a second port of the second four-way valve, a third port of the first four-way valve is connected to the cooling liquid inlet of the battery cooler, and a fourth port of the first four-way valve is connected to the outlet of the motor water pump;
a first port of the second four-way valve is connected to the cooling liquid outlet of the battery cooler, a third port of the second four-way valve is connected to a first port of the third four-way valve, and a fourth port of the second four-way valve is connected to a first port of the second three-way valve;
a second port of the third four-way valve is connected to the outlet of the power battery, a third port of the third four-way valve is connected to an inlet of the heating water pump, and a fourth port of the third four-way valve is separately connected to the outlet of the low-temperature radiator and the outlet of the heater core; and
a second port of the second three-way valve is connected to the outlet of the motor radiator, and a third port of the second three-way valve is connected to the inlet of the motor radiator.

5. The thermal management system according to any one of claims 1 to 4, further comprising a flow channel plate, wherein the battery water pump, the motor water pump, the heating water pump, the water-cooled condenser, the battery cooler, and the connector are integrated on the flow channel plate.

6. The thermal management system according to any one of claims 1 to 4, further comprising a water reservoir, wherein an outlet of the water reservoir is separately connected to the motor and the motor water pump.

7. The thermal management system according to any one of claims 1 to 4, further comprising a receiver-drier, wherein an inlet of the receiver-drier is connected to the refrigerant outlet of the water-cooled condenser, and an outlet of the receiver-drier is connected to the inlet of the evaporator core.

8. A control method for a thermal management system, the thermal management system comprising the thermal management system according to any one of claims 1 to 7, and the control method comprising:
acquiring a current ambient temperature, and determining a working mode of the thermal management system based on the current ambient temperature, to perform thermal management on the power battery, the motor and/or a passenger compartment.

9. The control method according to claim 8, wherein the thermal management system comprises the thermal management system according to claim 3, and the determining a working mode of the thermal management system based on the current ambient temperature comprises:
if the current ambient temperature is greater than or equal to a first pre-set threshold, controlling the thermal management system to operate in the first working mode;
if the current ambient temperature is greater than or equal to a second pre-set threshold and is less than the first pre-set threshold, controlling the thermal management system to operate in the second working mode or the fourth working mode; or
if the current ambient temperature is less than the second pre-set threshold, controlling the thermal management system to operate in the third working mode or the fourth working mode.

10. The control method according to claim 9, wherein the if the current ambient temperature is greater than or equal to a second pre-set threshold and is less than the first pre-set threshold, controlling the thermal management system to operate in the second working mode or the fourth working mode comprises:
if the current ambient temperature is greater than or equal to the second pre-set threshold and is less than the first pre-set threshold, and the power battery is in a cooling mode, controlling the thermal management system to operate in the second working mode; or
if the current ambient temperature is greater than or equal to the second pre-set threshold and is less than the first pre-set threshold, and the power battery is in a temperature equalization mode, controlling the thermal management system to operate in the fourth working mode; and
the if the current ambient temperature is less than the second pre-set threshold, controlling the thermal management system to operate in the third working mode or the fourth working mode comprises:
if the current ambient temperature is less than the second pre-set threshold and the power battery is in a heating mode, controlling the thermal management system to operate in the third working mode; or
if the current ambient temperature is less than the second pre-set threshold and the power battery is in the temperature equalization mode, controlling the thermal management system to operate in the fourth working mode.

11. The control method according to claim 9 or 10, further comprising:
in response to an inspection operation, controlling the thermal management system to operate in the fifth working mode.

12. A vehicle, comprising the thermal management system according to any one of claims 1 to 7.

13. A computer-readable storage medium, configured to store computer-readable instructions, wherein the computer-readable instructions, when executed by a processor, cause the processor to perform the control method according to any one of claims 8 to 11.
